# EUROPÄISCHE PATENTSCHRIFT

(11) **EP 3 816 046 B1**
(45) Veröffentlichungstag und Bekanntmachung des Hinweises auf die Patenterteilung: **07.06.2023**
(21) Anmeldenummer: 20191478.5
(22) Anmeldetag: 18.08.2020
(51) Int. Cl.: B64D 1/06, B64D 7/08, F41F 3/06

(54) **MODULARES FLUGKÖRPERSTARTSYSTEM ZUM STARTEN VON FLUGKÖRPERN VON EINER MOBILEN PLATTFORM AUS**
MODULAR MISSILE LAUNCH SYSTEM FOR LAUNCHING MISSILES FROM A MOBILE PLATFORM
SYSTÈME MODULAIRE DE LANCEMENT DE MISSILE DESTINÉ AU LANCEMENT DE MISSILES À PARTIR D'UNE PLATEFORME MOBILE

(30) Priorität: 30.10.2019 DE 102019007557
(43) Veröffentlichungstag der Anmeldung: 05.05.2021
(73) Patentinhaber: MBDA Deutschland GmbH, 86529 Schrobenhausen (DE)
(72) Erfinder: KROYER, Robert, 81925 München (DE)
(74) Vertreter: Isarpatent

(56) Entgegenhaltungen:
- WO-A1-2019/168643
- GB-A- 2 188 713
- RU-C1- 2 539 434
- US-A- 5 400 689
- US-A- 6 125 734
- US-A1- 2006 081 733
- US-A1- 2007 006 722
- US-A1- 2010 236 391
- US-B1- 10 408 567

## Beschreibung

Die vorliegende Erfindung betrifft ein modulares Flugkörperstartsystem zum Starten von Flugkörpern von einer mobilen Plattform aus, wie z.B. von einem Luftfahrzeug.

Zur Verbringung von Flugkörpern bzw. Raketen von einer mobilen Plattform aus, z.B. von einem Helikopter, einem Flugzeug oder allgemein einem Luftfahrzeug, werden typischerweise Abschuss- oder Startsysteme verwendet. Derartige Startsysteme weisen in der Regel eine an die mobile Plattform gekoppelte Trägervorrichtung auf, an welcher ein oder mehrere Startrohre befestigt sind, aus denen heraus die Flugkörper gestartet werden. Insbesondere wenn solche Startsysteme zur Verwendung an einem Luftfahrzeug vorgesehen sind, werden hohe Anforderungen an das Trägheits- und Schwingungsverhalten und die Masse gestellt. Insbesondere ist es wünschenswert, dass das Startsystem auch dann eine vordefinierte Schwingungsanforderung erfüllt, wenn einer oder mehrere Flugkörper bereits gestartet wurden und sich damit die Masse des Systems ändert.

Um diese Anforderungen zu erfüllen, werden Flugkörperstartsysteme üblicherweise individuell für eine jeweilige mobile Plattform ausgelegt und konstruiert, wobei typischerweise eine feste Anzahl an Startrohren vorgesehen ist. In der US 3 766 828 A wird ein modulares Startsystem beschrieben, welches ein oberes Startmodul mit einer ersten Trägereinrichtung zum Halten von zwei Startrohren und ein unteres Startmodul mit einer zweiten Trägereinrichtung zum Halten von weiteren zwei Startrohren aufweist. Das untere Trägermodul und das obere Trägermodul können über Ösen aneinander gekoppelt werden.

In der US 2010/0236391 A1 wird ein modulares Flugkörperstartsystem offenbart, bei welchem mehrere Startrohre untereinander verbindbar sind. An den Startrohren sind Pins vorgesehen, welche von einer Seitenwandung des Startrohrs vorspringen und in entsprechende Ausnehmungen des anderen Startrohrs einführbar sind. Innerhalb der Ausnehmung werden die Pins durch Bolzen und Keile gesichert.

Die RU 2539434 C1 offenbart ein Flugkörperstartsystem, bei dem Startrohre an ihren axialen Enden jeweils mit einem Rahmen versehen sind, an welchen parallel zu den Seitenwandungen der Startrohre vorstehende Pins angebracht sind. Diese sind in jeweilige Ausnehmungen des Rahmens der anderen Startrohre einführbar.

Es ist Aufgabe der vorliegenden Erfindung, ein verbessertes modulares Startsystem bereitzustellen.

Diese Aufgabe wird durch ein System mit den Merkmalen des Anspruchs 1 gelöst.

Erfindungsgemäß ist ein Modulares Flugkörperstartsystem zum Starten von Flugkörpern von einer mobilen Plattform aus vorgesehen, mit einem rechteckförmigen ersten Tragrahmen. Der erste Tragrahmen umfasst einen sich in einer Längsrichtung erstreckenden ersten Längsträger, an welchem zumindest eine Plattform-Kopplungsstruktur zur lösbaren Befestigung des ersten Tragrahmens an der mobilen Plattform ausgebildet ist, und einen sich entlang der Längsrichtung erstreckenden zweiten Längsträger, welcher in einer quer zur Längsrichtung verlaufenden Hochrichtung beabstandet zu dem ersten Längsträger angeordnet ist und an einer abgewandt zu dem ersten Längsträger orientierten Unterseite eine erste Verbindungsstruktur aufweist. Die erste Verbindungsstruktur definiert einen sich in der Längsrichtung erstreckenden ersten Steckverbindungsabschnitt, an welchen ein zweiter Tragrahmen mit einem komplementär zu dem ersten Steckverbindungsabschnitt ausgebildeten zweiten Steckverbindungsabschnitt in der Hochrichtung ansteckbar ist, und weist zumindest zwei in der Längsrichtung beabstandete erste Durchgangsbohrungen auf, durch welche jeweils eine Verbindungseinrichtung durchführbar ist, um den ersten und den zweiten Tragrahmen aneinander zu fixieren, wenn der zweite Tragrahmen an den ersten Tragrahmen angesteckt ist. Der erste Tragrahmen weist ferner zumindest eine Startrohrfixierungsstruktur zur Anbringung eines Flugkörperstartrohrs an dem ersten Tragrahmen auf.

Eine der Erfindung zugrundeliegende Idee besteht darin, an einem sich in einer Längsrichtung erstreckenden Tragrahmen, an welchem ein Flugkörperstartrohr befestigbar ist, eine Verbindungsstruktur vorzusehen, welche ein ineinanderstecken des Tragrahmens und eines weiteren Tragrahmens erlaubt. Hierzu ist die Verbindungsstruktur an einer Unterseite bzw. einem unteren Ende des ersten Tragrahmens als sich in der Längsrichtung erstreckender Stecker oder als sich in der Längsrichtung erstreckende Buchse ausgebildet. Allgemein definiert die Verbindungsstruktur des ersten Tragrahmens somit einen ersten Steckverbindungsabschnitt. Ein weiterer, zweiter Tragrahmen, welcher an seiner Oberseite zweite Verbindungsstruktur mit einem komplementär zu dem ersten Steckverbindungsabschnitt ausgebildeten zweiten Steckverbindungsabschnitt aufweist, kann somit in der Hochrichtung an den ersten Steckverbindungsabschnitt des ersten Tragrahmens angesteckt werden. Erfindungsgemäß ist vorgesehen, dass die Verbindungsstruktur zumindest zwei in der Längsrichtung beabstandete erste Durchgangsbohrungen aufweist. Diese können sich z.B. durch den ersten Steckverbindungsabschnitt hindurch erstrecken, so dass ein Bolzen, eine Schraube, ein Niet oder allgemein eine Verbindungsvorrichtung durch die ersten Durchgangsbohrungen und durch an der zweiten Verbindungsstruktur des zweiten Tragrahmens korrespondierend ausgebildete Durchgangsbohrungen hindurchgeführt werden können, um den ersten und den zweiten Tragrahmen aneinander zu fixieren.

Ein Vorteil des Startsystems besteht darin, dass durch die längliche Gestaltung des ersten Steckverbindungsabschnitts in Bezug auf eine sich quer zur Hochrichtung und zur Längsrichtung erstreckende Querrichtung eine formschlüssige Fixierungsmöglichkeit für einen weiteren Tragrahmen bereitgestellt wird. Durch die längliche Gestaltung wird die Kraftübertragung zwischen dem ersten Tragrahmen und einem an diesen angesteckten zweiten Tragrahmen vorteilhaft entlang der Längsrichtung verteilt. Dadurch kann eine sehr steife Rahmenanordnung aus dem ersten und einem optionalen zweiten Tragrahmen gebildet werden.

Vorteilhafte Ausgestaltungen und Weiterbildungen ergeben sich aus den auf die unabhängigen Ansprüche rückbezogenen Unteransprüchen in Verbindung mit der Beschreibung.

Der erste Tragrahmen kann ferner einen ersten Verbindungsträger, welcher den ersten und den zweiten Längsträger verbindet, und einen in Bezug auf die Längsrichtung beabstandet zu dem ersten Längsträger angeordneten zweiten Verbindungsträger aufweisen, welcher den ersten und den zweiten Längsträger verbindet. Damit wird ein rechteckförmiger, geschlossener Rahmen ausgebildet, welcher bezogen auf sein Gewicht eine hohe mechanische Steifigkeit aufweist. Die Verbindungsträger können sich beispielsweise im Wesentlichen senkrecht oder allgemein quer zu den Längsträgern erstrecken.

Gemäß einer Ausführungsform des Startsystems kann vorgesehen sein, dass der erste Steckverbindungsabschnitt durch eine an der Unterseite des zweiten Längsträgers ausgebildete Ausnehmung oder durch eine von der Unterseite des zweiten Längsträgers in der Hochrichtung vorstehende Laschenanordnung ausgebildet ist. Beispielsweise kann der zweite Längsträger als an der Unterseite offenes Hohlprofil mit zwei einander gegenüberliegenden Profilseitenwandungen ausgebildet sein, welche sich in der Längsrichtung erstrecken, wobei die Profilseitenwandungen die den ersten Steckverbindungsabschnitt ausbildende, sich in der Längsrichtung erstreckende Ausnehmung definieren. Die ersten Durchgangslöcher können hierbei insbesondere in den Profilseitenwandungen ausgebildet sein und/oder in einer die Profilseitenwandungen verbindenden Profildeckenwandung. Damit werden das Gewicht und der konstruktive Aufbau der Steckverbindungseinrichtung vereinfacht. Die Laschenanordnung kann beispielsweise eine sich in der Längsrichtung durchgehend erstreckende Lasche aufweisen, welche von der Unterseite des zweiten Längsträgers vorsteht. Die Laschenanordnung kann beispielsweise zwei in der Querrichtung beabstandete Laschen aufweisen. Es ist beispielsweise denkbar, dass diese durch die Profilseitenwandungen gebildet werden. Weiterhin ist denkbar, dass die Laschenanordnung mehrere, allgemein zumindest zwei in der Längsrichtung beabstandete Laschen aufweist, wodurch das Gewicht der Laschenanordnung vorteilhaft weiter reduziert wird.

Gemäß einer weiteren Ausführungsform kann der erste Steckverbindungsabschnitt sich in Bezug auf die Längsrichtung über zumindest 80 Prozent einer Länge des zweiten Längsträgers erstrecken. Insbesondere kann sich erste Steckverbindungsabschnitt sich in Bezug auf die Längsrichtung über zumindest 90 Prozent, vorzugsweise über zumindest 95 Prozent einer Länge des zweiten Längsträgers erstrecken. Damit wird die Verteilung der Kraftübertragung zwischen erstem und zweitem Tragrahmen vorteilhaft weiter entlang der Längsrichtung vertei lt.

Gemäß einer weiteren Ausführungsform kann der erste Tragrahmen zumindest einen sich quer zu den Längsträgern erstreckenden ersten Querträger aufweisen. Der zumindest eine Querträger erstreckt sich entlang der Querrichtung. Beispielsweise kann der zumindest eine Querträger einen ersten Querträgerabschnitt aufweisen, welcher sich in Bezug auf die Querrichtung auf einer ersten Seite der Längsträger erstreckt, und einen zweiten Querträgerabschnitt, welcher sich in Bezug auf die Querrichtung auf einer zweiten Seite der Längsträger erstreckt. Allgemein ist zumindest ein Querträger vorgesehen. Beispielsweise kann der erste Tragrahmen einen vorderen Querträger und ein in Bezug auf die Längsrichtung beabstandet zu diesem angeordneten hinteren Querträger aufweisen. Der zumindest eine Querträger stellt vorteilhaft eine zusätzliche Montagefläche bereit.

Gemäß einer Ausführungsform kann vorgesehen sein, dass zumindest eine Startrohrfixierungsstruktur des ersten Tragrahmens an dem ersten Querträger ausgebildet ist. Die Startrohrfixierungsstruktur kann beispielsweise als eine Ausnehmung am Querträger ausgebildet sein, in welcher eine Befestigungseinrichtung zur Befestigung des Startrohrs einführbar ist. Alternativ oder zusätzlich können an dem ersten und/oder dem zweiten Längsträger und/oder an dem ersten und/oder dem zweiten optionalen Verbindungsträger Startrohrfixierungsstrukturen ausgebildet oder vorgesehen sein.

Gemäß einer weiteren Ausführungsform kann vorgesehen sein, dass der zumindest eine erste Querträger einstückig mit einem der Träger aus der Gruppe bestehend aus dem ersten Längsträger, dem zweiten Längsträger, einem den ersten und den zweiten Längsträger verbindenden ersten Verbindungsträger und einem den ersten und den zweiten Längsträger verbindenden zweiten Verbindungsträger ausgebildet ist. Damit wird die Kraftübertragung zwischen dem Querträger und den anderen Trägern des Tragrahmens vorteilhaft verbessert.

Gemäß einer weiteren Ausführungsform kann der zumindest eine erste Querträger in Bezug auf die Hochrichtung im Bereich des ersten Längsträgers angeordnet sein. Damit ist der Querträger in Bezug auf die Hochrichtung sehr nahe an der an dem ersten Längsträger ausgebildeten Plattform-Kopplungsstruktur angeordnet. Dies verringert vorteilhaft einen Krafteinleitungsweg zum Einleiten einer Kraft aus dem Querträger in die Plattform-Kopplungsstruktur. Ferner wird die Ermüdungsfestigkeit des Querträgers infolge von Vibrationen des Querträgers verbessert.

Gemäß einer weiteren Ausführungsform kann vorgesehen sein, dass der erste Tragrahmen zusätzlich zumindest eine Versteifungsstrebe aufweist, welche sich zwischen zwei Trägern aus der Gruppe bestehend aus dem ersten Längsträger, dem zweiten Längsträger, einem den ersten und den zweiten Längsträger verbindenden ersten Verbindungsträger und einem den ersten und den zweiten Längsträger verbindenden zweiten Verbindungsträger erstreckt. Dies verbessert vorteilhaft die Verwindungssteifigkeit des Tragrahmens in Bezug auf die Längsrichtung. Die Versteifungsstrebe kann beispielsweise als Hohlprofil realisiert sein. Dadurch wird vorteilhaft zusätzlicher Montageraum bereitgestellt, in welchem beispielsweise eine elektronische Steuerungsvorrichtung untergebracht sein kann.

Gemäß einer weiteren Ausführungsform kann das Startsystem zumindest ein Startrohr aufweisen, welches mit der zumindest einen Startrohrfixierungsstruktur des ersten Tragrahmens verbindbar oder verbunden ist. Beispielsweise kann das Startrohr ein sich in der Längsrichtung erstreckendes Rohr sein, welches in Bezug auf die Querrichtung auf der ersten Seite oder auf der zweiten Seite des ersten Tragrahmens angeordnet ist. Insbesondere kann vorgesehen sein, dass an dem ersten Tragrahmen zwei Startrohre anordenbar sind, wobei ein erstes Startrohr in Bezug auf die Querrichtung auf der ersten Seite des ersten Tragrahmens angeordnet ist und ein zweites Startrohr in Bezug auf die Querrichtung auf der zweiten Seite des ersten Tragrahmens angeordnet ist.

Gemäß einer weiteren Ausführungsform kann das Startsystem zusätzlich zumindest zwei Verbindungseinrichtungen und einen rechteckförmigen zweiten Tragrahmen aufweisen. Der zweite Tragrahmen umfasst einen sich in einer Längsrichtung erstreckenden dritten Längsträger, welcher an einer Oberseite eine zweite Verbindungsstruktur aufweist, wobei die zweite Verbindungsstruktur einen sich in der Längsrichtung erstreckenden, komplementär zu dem ersten Steckverbindungsabschnitt ausgebildeten zweiten Steckverbindungsabschnitt definiert, welcher an den ersten Steckverbindungsabschnitt des ersten Tragrahmens in der Hochrichtung ansteckbar ist, und zumindest zwei in der Längsrichtung korrespondierend zu den ersten Durchgangsbohrungen angeordnete zweite Durchgangsbohrungen aufweist. Die Verbindungseinrichtungen sind jeweils durch die ersten und die zweiten Durchgangsbohrungen durchführbar, um den ersten und den zweiten Tragrahmen aneinander zu fixieren, wenn der zweite Tragrahmen an den ersten Tragrahmen angesteckt ist. Ferner weist auch der zweite Tragrahmen zumindest eine Startrohrfixierungsstruktur zur Anbringung eines Flugkörperstartrohrs an dem zweiten Tragrahmen auf. Der zweite Tragrahmen ist somit im Wesentlichen gleich aufgebaut wie der erste Tragrahmen und weist an einer Oberseite seines Längsträgers einen zweiten Steckverbindungsabschnitt auf, welcher an den ersten Steckverbindungsabschnitt ansteckbar ist. Der zweite Steckverbindungsabschnitt ist komplementär zu dem ersten Steckverbindungsabschnitt ausgebildet. Folglich ist der zweite Steckverbindungsabschnitt als Stecker ausgebildet, wenn der erste Steckverbindungsabschnitt als Buchse ausgebildet ist, und als Buchse, wenn der erste Steckverbindungsabschnitt als Stecker ausgebildet ist. Wenn der zweite Tragrahmen mit seinem zweiten Steckverbindungsabschnitt an den ersten Steckverbindungsabschnitt angesteckt ist, sind die Durchgangslöcher beider Steckverbindungsabschnitte fluchtend angeordnet und die Verbindungseinrichtungen, z.B. Bolzen, Schrauben, Nieten oder dergleichen, können in die Durchgangslöcher eingeführt werden. Damit wird, wie dies oben bereits beschrieben wurde, eine konstruktiv einfach aufgebaute, schwingungsfeste und mechanisch sehr robuste Verbindung zwischen den Tragrahmen bereitgestellt. Durch die lösbare Kopplung von erstem und zweitem Tragrahmen aneinander kann das Startsystem zudem flexibel umgerüstet werden, z.B. um die Beladung des Systems mit Startrohren zu verändern.

Der zweite Tragrahmen kann optional einen vierten Längsträger aufweisen, welcher in der Hochrichtung beabstandet zu dem dritten Längsträger angeordnet ist. Ferner kann der zweite Tragrahmen einen dritten Verbindungsträger, welcher den dritten und den vierten Längsträger verbindet, und einen in Bezug auf die Längsrichtung beabstandet zu dem dritten Längsträger angeordneten vierten Verbindungsträger aufweisen, welcher den dritten und den vierten Längsträger verbindet. Damit wird ein rechteckförmiger, geschlossener Rahmen ausgebildet, welcher bezogen auf sein Gewicht eine hohe mechanische Steifigkeit aufweist. Die Verbindungsträger können sich beispielsweise im Wesentlichen senkrecht oder allgemein quer zu den Längsträgern erstrecken. Alternativ oder zusätzlich kann der zweite Tragrahmen auch zumindest einen zweiten Querträger aufweisen, wie dies oben für den ersten Tragrahmen beschrieben wurde. Beispielsweise kann zumindest eine Startrohrfixierungsstruktur des zweiten Tragrahmens an dem zweiten Querträger ausgebildet sein. Der zumindest eine zweite Querträger kann beispielsweise einstückig mit dem dritten oder vierten Längsträger ausgebildet sein. Weiterhin kann der zumindest eine zweite Querträger beispielsweise in Bezug auf die Hochrichtung im Bereich des dritten Längsträgers angeordnet sein.

Gemäß einer Ausführungsform kann der zweite Steckverbindungsabschnitt durch eine von der Oberseite des dritten Längsträgers in der Hochrichtung vorstehende Laschenanordnung oder durch eine an der Oberseite des dritten Längsträgers ausgebildete Ausnehmung ausgebildet sein. Beispielsweise kann der dritte Längsträger als an der Oberseite offenes Hohlprofil mit zwei einander gegenüberliegenden Profilseitenwandungen ausgebildet sein, welche sich in der Längsrichtung erstrecken, wobei die Profilseitenwandungen die den zweiten Steckverbindungsabschnitt ausbildende, sich in der Längsrichtung erstreckende Ausnehmung definieren. Die zweiten Durchgangslöcher können hierbei insbesondere in den Profilseitenwandungen ausgebildet sein und/oder in einer die Profilseitenwandungen verbindenden Profilbodenwandung. Damit werden das Gewicht und der konstruktive Aufbau der Steckverbindungseinrichtung vereinfacht. Die Laschenanordnung kann beispielsweise eine sich in der Längsrichtung durchgehend erstreckende Lasche aufweisen, welche von der Unterseite des zweiten Längsträgers vorsteht. Die Laschenanordnung kann beispielsweise zwei in der Querrichtung beabstandete Laschen aufweisen. Es ist beispielsweise denkbar, dass diese durch die Profilseitenwandungen gebildet werden. Weiterhin ist denkbar, dass die Laschenanordnung mehrere, allgemein zumindest zwei in der Längsrichtung beabstandete Laschen aufweist, wodurch das Gewicht der Laschenanordnung vorteilhaft weiter reduziert wird.

Gemäß einer weiteren Ausführungsform kann vorgesehen sein, dass der zweite Steckverbindungsabschnitt sich in Bezug auf die Längsrichtung über zumindest 80 Prozent, insbesondere über zumindest 90 Prozent und insbesondere bevorzugt über zumindest 95 Prozent einer Länge des dritten Längsträgers erstreckt. Vorteilhaft sind der erste und der zweite Steckverbindungsabschnitt gleich lang. Durch die Erstreckung über zumindest 80 Prozent oder mehr der Länge des dritten Längsprofils wird die Verteilung der Kraftübertragung zwischen erstem und zweitem Tragrahmen vorteilhaft weiter entlang der Längsrichtung verteilt.

Gemäß einer weiteren Ausführungsform erstrecken sich die Durchgangsbohrungen jeweils in einer quer zu der Hochrichtung und zu der Längsrichtung erstreckenden Querrichtung. Das heißt, die ersten Durchgangsbohrungen der ersten Verbindungsstruktur und die zweiten Durchgangsbohrungen der zweiten Verbindungsstruktur erstrecken sich jeweils in Querrichtung, wodurch, wenn die ersten und die zweiten Steckverbindungsabschnitte ineinander gesteckt sind, die Verbindungsvorrichtungen auf einfache Weise in die von der Seite der Tragrahmen leicht zugänglichen Durchgangsbohrungen eingeführt werden können.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine perspektivische Ansicht eines Flugkörperstartsystems gemäß einem Ausführungsbeispiel der Erfindung, wobei das Flugkörperstartsystem in einem Zustand dargestellt ist, in welchem ein erster und ein zweiter Tragrahmen aneinander gesteckt sind;
- Fig. 2: eine perspektivische Ansicht eines Flugkörperstartsystems gemäß einem weiteren Ausführungsbeispiel der Erfindung, wobei das Flugkörperstartsystem in einem Zustand dargestellt ist, in welchem ein erster und ein zweiter Tragrahmen aneinander gesteckt sind;
- Fig. 3: eine perspektivische Ansicht eines Flugkörperstartsystems gemäß einem Ausführungsbeispiel der Erfindung;
- Fig. 4: eine Schnittansicht des in Fig. 3 gezeigten Systems;
- Fig. 5: einen zweiten Tragrahmen eines Flugkörperstartsystems gemäß einem Ausführungsbeispiel der Erfindung;
- Fig. 6: eine Schnittansicht des in Fig. 5 gezeigten zweiten Tragrahmens;
- Fig. 7: eine perspektivische Explosionsansicht des in Fig. 2 gezeigten Systems;
- Fig. 8: eine abgebrochene Schnittansicht einer Verbindung zwischen einem ersten Tragrahmen und einem zweiten Tragrahmen eines Flugkörperstartsystems gemäß einem Ausführungsbeispiel der Erfindung;
- Fig. 9: eine Seitenansicht der in Fig. 8 dargestellten Verbindung;
- Fig. 10: eine perspektivische Ansicht eines Flugkörperstartsystems gemäß einem weiteren Ausführungsbeispiel der Erfindung;
- Fig. 11: eine Schnittansicht eines Flugkörperstartsystems gemäß einem weiteren Ausführungsbeispiel der Erfindung,
- Fig. 12: eine perspektivische Ansicht eines Flugkörperstartsystems gemäß einem weiteren Ausführungsbeispiel der Erfindung;
- Fig. 13: eine Schnittansicht eines Flugkörperstartsystems gemäß einem weiteren Ausführungsbeispiel der Erfindung,
- Fig. 14: eine Schnittansicht eines Flugkörperstartsystems gemäß einem weiteren Ausführungsbeispiel der Erfindung; und
- Fig. 15: eine Schnittansicht eines Flugkörperstartsystems gemäß einem weiteren Ausführungsbeispiel der Erfindung;
- Fig. 16: eine Seitenansicht eines Flugkörperstartsystems gemäß einem weiteren Ausführungsbeispiel der Erfindung;
- Fig. 17: eine schematische Ansicht eines Luftfahrzeugs mit einem Flugkörperstartsystem gemäß einem weiteren Ausführungsbeispiel der Erfindung; und
- Fig. 18: eine schematische Schnittansicht einer Verbindung eines Flugkörperstartsystems gemäß einem Ausführungsbeispiel der Erfindung mit einer mobilen Plattform.

In den Figuren bezeichnen dieselben Bezugszeichen gleiche oder funktionsgleiche Komponenten, soweit nichts Gegenteiliges angegeben ist.

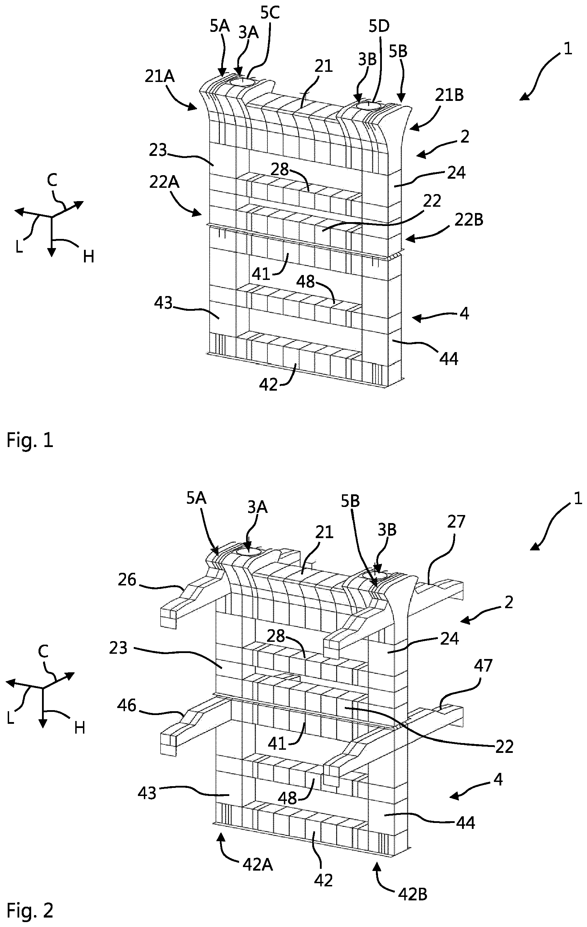

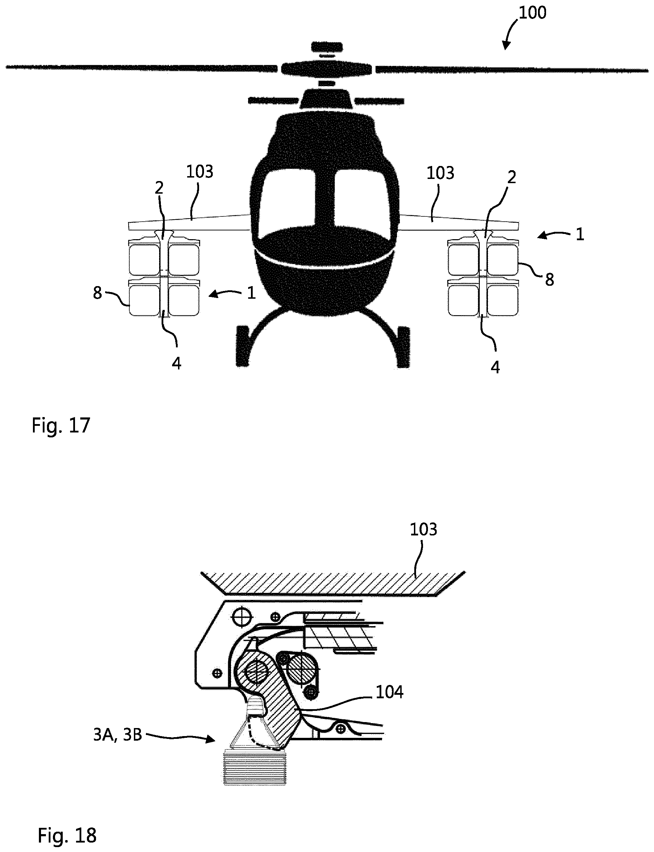

Fig. 1 zeigt beispielhaft ein modulares Flugkörperstartsystem 1 zum Starten von Flugkörpern von einer mobilen Plattform 100. In Fig. 17 ist rein beispielhaft eine als Helikopter ausgebildete mobile Plattform 100 dargestellt. Das Flugkörperstartsystem 1 kann an der mobilen Plattform 100 befestigt werden und dient dazu, Flugkörper (nicht dargestellt), wie Lenkraketen, ballistische Raketen oder dergleichen, von der mobilen Plattform 100 aus zu starten.

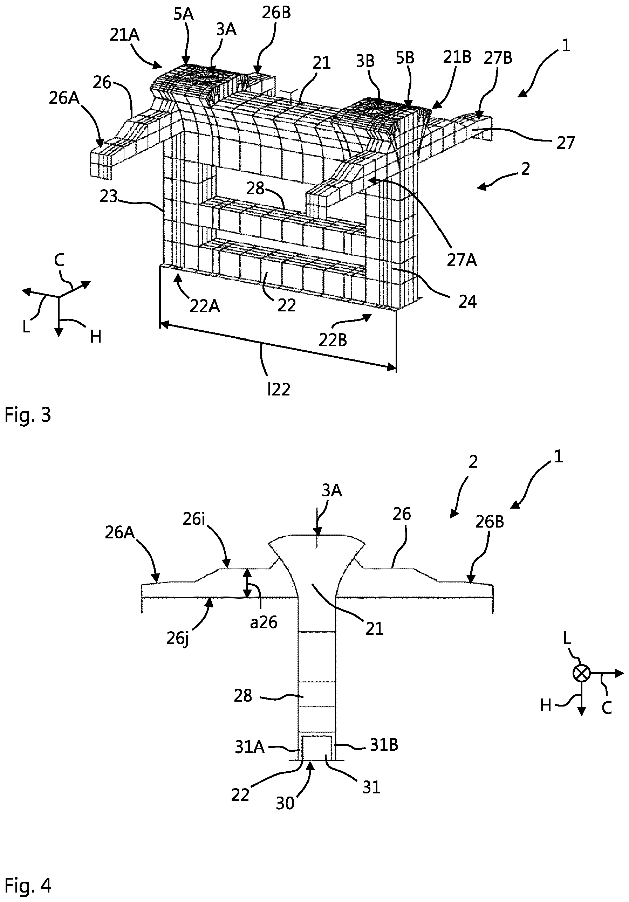

Das in Fig. 1 beispielhaft dargestellte System 1 weist einen ersten Tragrahmen 2 und einen optionalen zweiten Tragrahmen 4 auf, die jeweils rechteckförmig ausgebildet sind. In Fig. 2 ist beispielhaft ein weiteres Flugkörperstartsystem 1 dargestellt, welches ebenfalls einen ersten Tragrahmen 2 und einen optionalen zweiten Tragrahmen 4 aufweist. Das in Fig. 2 beispielhaft gezeigte System 1 unterscheidet sich von dem in Fig. 1 dargestellten System 1 insbesondere dadurch, dass der erste und der optionale zweite Tragrahmen 2, 4jeweils Querträger 26, 27, 46, 47 aufweisen, wie nachfolgend noch im Detail erläutert wird. In Fig. 3 ist beispielhaft ein System 1 mit nur einem ersten Tragrahmen 2 dargestellt. Dieser kann auch in Kombination mit dem System 1 gemäß Fig. 2 verwendet werden.

Wie insbesondere in den Fign. 1 bis 3 und 7 gezeigt ist, kann der erste Tragrahmen 2 einen sich in oder entlang einer Längsrichtung L erstreckenden ersten Längsträger 21, einen sich in oder entlang der Längsrichtung L erstreckenden zweiten Längsträger 22, welcher in einer quer zur Längsrichtung L verlaufenden Hochrichtung H beabstandet zu dem ersten Längsträger 21 angeordnet ist, einen ersten Verbindungsträger 23, der sich zwischen dem ersten und dem zweiten Längsträger 21, 22 erstreckt, und einen zweiten Verbindungsträger 24 aufweisen, welcher sich zwischen dem ersten und dem zweiten Längsträger 21, 22 erstreckt und in der Längsrichtung L beabstandet zu dem ersten Verbindungsträger 23 angeordnet ist. Wie insbesondere in den Fign. 1 bis 3 und 7 weiterhin beispielhaft dargestellt ist, kann der erste Verbindungsträger 23 sich zwischen einem ersten Endabschnitt 21A des ersten Längsträgers 21 und einem ersten Endabschnitt 22A des zweiten Längsträgers 22 erstrecken und der der zweite Verbindungsträger 24 kann sich zwischen einem in Bezug auf die Längsrichtung L entgegengesetzt zu dem ersten Endabschnitt 21A gelegenen zweiten Endabschnitt 21B des ersten Längsträgers 21 und einem in Bezug auf die Längsrichtung L entgegengesetzt zu dem ersten Endabschnitt 22A gelegenen zweiten Endabschnitt 22B des zweiten Längsträgers 22 erstrecken. Es ist es auch denkbar, dass der erste Längsträger 21 in Bezug auf die Längsrichtung L mit seinen Endabschnitten 21A, 21B über den ersten Verbindungsträger 23 und/oder über den zweiten Verbindungsträger 24 hinaus vorsteht. Selbstverständlich ist es auch denkbar, dass der zweite Längsträger 22 in Bezug auf die Längsrichtung L mit seinen Endabschnitten 22A, 22B über den ersten Verbindungsträger 23 und/oder über den zweiten Verbindungsträger 24 hinaus vorsteht.

Wie insbesondere in den Fign. 1 und 2 gezeigt ist, sind an dem ersten Längsträger 21 eine erste Plattform-Kopplungsstruktur 3A und eine zweite Plattform-Kopplungsstruktur 3B ausgebildet. Allgemein ist zumindest eine Plattform-Kopplungsstruktur 3A, 3B an dem ersten Längsträger 21 vorgesehen. Die Plattform-Kopplungsstruktur 3A, 3B dient zur lösbaren Befestigung des ersten Tragrahmens 2 an der mobilen Plattform 100. Wie in den Fign. 1 und 2 beispielhaft dargestellt ist, können die erste und die zweite Plattform-Kopplungsstruktur 3A, 3B jeweils in den Endabschnitten 21A, 21B des ersten Längsträgers 21 ausgebildet sein. Der erste Längsträger 21 kann hierbei in den Endabschnitten 21A, 21 Bjeweils an einer Oberseite in der Hochrichtung H vorspringende Bereiche 5A, 5B aufweisen. Diese vorspringenden Bereiche 5A, 5B können jeweils eine Ausnehmung 5C, 5D aufweisen, in welchen eine z.B. als Lasche (nicht dargestellt) ausgebildete Plattform-Kopplungsstruktur 3A, 3B angeordnet ist. Die zumindest eine Plattform-Kopplungsstruktur 3A, 3B kann beispielsweise gemäß dem Standard MIL-STD-8591 ausgebildet sein.

Wie in den Fign. 1 bis 3 und 7 weiterhin beispielhaft dargestellt ist, kann der erste Tragrahmen 2 weiterhin zumindest eine optionale Versteifungsstrebe 28 aufweisen. In den Fign. 1 bis 3 und 7 ist rein beispielhaft dargestellt, dass eine Versteifungsstrebe 28 vorgesehen ist, welche sich zwischen dem ersten und dem zweiten Verbindungsträger 23, 24 erstreckt. Allgemein erstreckt sich die zumindest eine Versteifungsstrebe 28 zwischen zwei Trägern aus der Gruppe bestehend aus dem ersten Längsträger 21, dem zweiten Längsträger 22, dem ersten Verbindungsträger 23 und dem zweiten Verbindungsträger 24.

Die Längsträger 21, 22, die Verbindungsträger 23, 24 und die Versteifungsstrebe 28 des ersten Tragrahmens 2 können beispielsweise miteinander verschweißt sein, aus einem Vollmaterial spanend hergestellt, in einem additiven Herstellungsverfahren ausgebildet oder in anderer Weise einstückig hergestellt sein. Selbstverständlich können die Längsträger 21, 22, die Verbindungsträger 23, 24 und die Versteifungsstrebe 28 des ersten Tragrahmens 2 auch verschraubt, vernietet oder in anderer Weise miteinander verbunden sein.

Wie in den Fign. 2 bis 4 und 7 beispielhaft dargestellt ist, kann der erste Tragrahmen 2 zumindest einen ersten Querträger 26 aufweisen. In den Fign. 2 bis 4 und 7 ist rein beispielhaft dargestellt, dass der erste Tragrahmen 2 einen in Bezug auf die Längsrichtung L vorderen ersten Querträger 26 und einen in Bezug auf die Längsrichtung L hinteren ersten Querträger 27 aufweist, welcher in der Längsrichtung L beabstandet zu dem ersten vorderen Querträger 26 angeordnet ist. In den Fign. 2 bis 4 und 7 ist ferner beispielhaft dargestellt, dass der vordere erste Querträger 26 im ersten Endabschnitt 21A des ersten Längsträgers 21 und der hintere erste Querträger 27 im zweiten Endabschnitt 22A des ersten Längsträgers 21 angeordnet ist. Wie in den Fign. 2 bis 4 und 7 weiterhin rein beispielhaft dargestellt ist, kann der der zumindest eine erste Querträger 26, 27 in Bezug auf die Hochrichtung H im Bereich des ersten Längsträgers 21 angeordnet sein. Unabhängig von der Anordnung der Querträger 26, 27 ist es auch denkbar, dass der erste Längsträger 21 in Bezug auf die Längsrichtung L mit seinen Endabschnitten 21A, 21B über den ersten Verbindungsträger 23 und/oder über den zweiten Verbindungsträger 24 hinaus vorsteht. Die Querträger 26, 27 können in diesem Fall auch in den über den jeweiligen Verbindungsträger 23, 24 hinausragenden Endabschnitten 21A, 21B des ersten Längsträgers 21 angeordnet sein. In gleicher Weise können die Querträger 26, 27 auch in über den jeweiligen Verbindungsträger 23, 24 hinausragenden Endabschnitten 22A, 22B des zweiten Längsträgers 22 angeordnet sein.

Wie insbesondere in Fig. 4 erkennbar ist, erstreckt sich der zumindest eine erste Querträger 26, 27 quer zu den Längsträgern 21, 22 bzw. in einer Querrichtung C, welche quer zu der Längsrichtung L und quer zu der Hochrichtung H verläuft. Die Querträger 26, 27 können insbesondere jeweils einen ersten Querträgerabschnitt 26A, 27A aufweisen, welcher sich in Bezug auf die Querrichtung C auf einer ersten Seite der Längsträger 21, 22 erstreckt, und einen zweiten Querträgerabschnitt 26B, 27B, welcher sich in Bezug auf die Querrichtung C auf einer zweiten Seite der Längsträger 21, 22 erstreckt, wie dies beispielhaft in den Fign. 2 bis 4 und 7 dargestellt ist. Der erste Querträgerabschnitt 26A, 27A und der zweite Querträgerabschnitt 26B, 27B können sich jeweils symmetrisch in Bezug auf die Längsträger 21, 22 bzw. die Querrichtung C erstrecken. Wie in Fig. 4 rein beispielhaft dargestellt, können der erste Querträgerabschnitt 26A, 27A und der zweite Querträgerabschnitt 26B, 27B jeweils eine entlang der Querrichtung C gestufte Querschnittsform aufweisen. Hierbei kann jeder Querträgerabschnitt 26A, 27A, 26B, 27B eine ebene, in Bezug auf die Hochrichtung H unteren Oberfläche 26j und eine in Bezug auf die in Bezug auf die Hochrichtung H gestuft verlaufende obere Oberfläche 26i aufweisen, wobei ein Abstand a26 zwischen der oberen Oberfläche 26i und der unteren Oberfläche 26j mit zunehmendem Abstand von den Längsträgern 21, 22 stufenweise abnimmt, wie dies in Fig. 4 beispielhaft dargestellt ist.

Der zumindest eine erste Querträger 26, 27 kann insbesondere einstückig mit dem ersten Längsträger 21 ausgebildet sein, wie dies in den Fign. 3 und 4 schematisch dargestellt ist. Beispielsweise können die Querträgerabschnitte 26A, 26B, 27A, 27B mit dem Längsträger 21 verschweißt sein. Allgemein kann der zumindest eine erste Querträger 26, 27 einstückig mit einem der Träger aus der Gruppe bestehend aus dem ersten Längsträger 21, dem zweiten Längsträger 22, dem ersten Verbindungsträger 23 und dem zweiten Verbindungsträger 24 ausgebildet sein. Alternativ hierzu kann der zumindest eine erste Querträger 26, 27 mit einem der Träger aus der Gruppe bestehend aus dem ersten Längsträger 21, dem zweiten Längsträger 22, dem ersten Verbindungsträger 23 und dem zweiten Verbindungsträger 24 verschraubt, vernietet oder in anderer Weise verbunden sein.

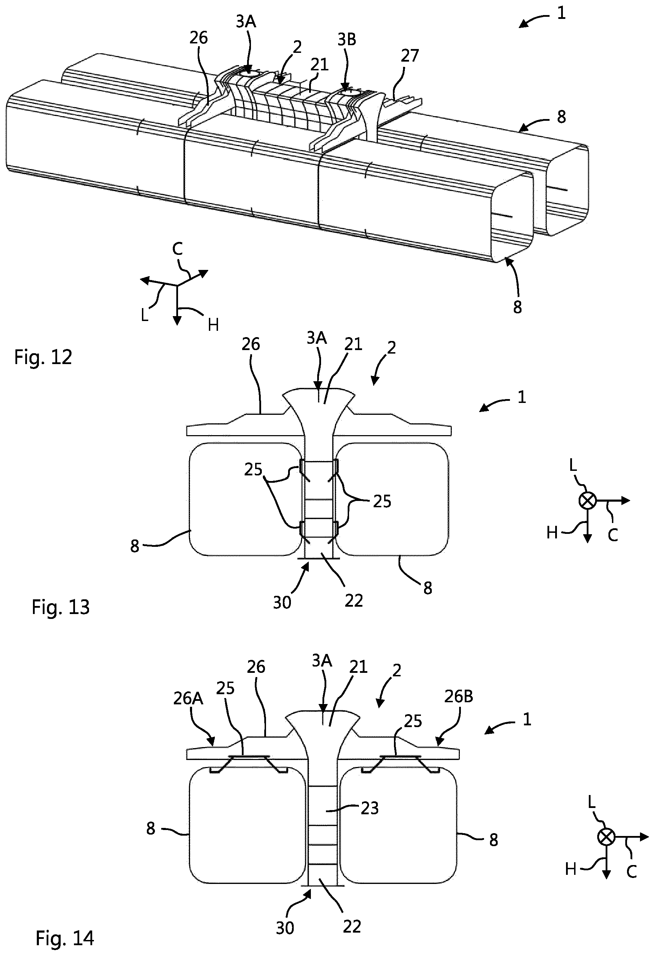

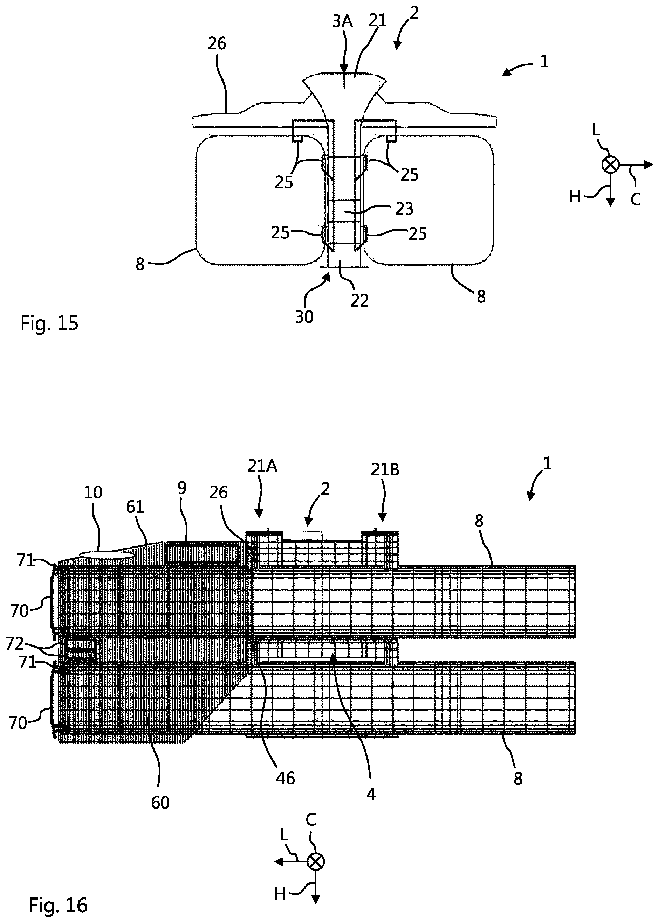

Der erste Tragrahmen 2 weist ferner zumindest eine Startrohrfixierungsstruktur 25 auf, welche zur Anbringung eines Flugkörperstartrohrs 8 an dem ersten Tragrahmen 2 dient. Allgemein können eine oder mehrere Startrohrfixierungsstrukturen 25 an einem oder mehreren der Träger aus der Gruppe bestehend aus dem ersten Längsträger 21, dem zweiten Längsträger 22, dem ersten Verbindungsträger 23 und dem zweiten Verbindungsträger 24 vorgesehen sein. In Fig. 13 ist beispielhaft dargestellt, dass an dem ersten Verbindungsträger 23 je Startrohr 8jeweils zwei in der Hochrichtung H beabstandete Startrohrfixierungsstrukturen 25 ausgebildet sind. In Fig. 14 ist beispielhaft dargestellt, dass an dem vorderen ersten Querträger 26 an den beiden Querträgerabschnitten 26A, 26B jeweils eine Startrohrfixierungsstruktur 25 ausgebildet ist. In Fig. 15 ist beispielhaft dargestellt, dass an dem vorderen ersten Querträger 26 an den beiden Querträgerabschnitten 26A, 26B jeweils eine Startrohrfixierungsstruktur 25 und an dem ersten Verbindungsträger 23 jeweils Startrohrfixierungsstrukturen 25 vorgesehen sind. Die Startrohrfixierungsstrukturen 25 können beispielsweise als Ausnehmungen ausgebildet sein, in welche eine Befestigungsvorrichtung, z.B. in Form einer Schraube zur Befestigung des Startrohrs 8 einschraubbar ist. Auch können die Startrohrfixierungsstrukturen 25 als Nuten, Bügel oder dergleichen ausgebildet sein, mit welchen eine an dem jeweiligen Startrohr 8 vorgesehene Fixierungsstruktur formschlüssig verbindbar ist.

Der optionale zweite Tragrahmen 4 kann im Wesentlichen genauso aufgebaut sein wie der erste Tragrahmen 2. Wie in den Fign. 1, 2, 5 und 7 beispielhaft dargestellt ist, kann der zweite Tragrahmen 4 einen sich in der Längsrichtung L erstreckenden dritten Längsträger 41 und einen vierten Längsträger 42 aufweisen, welcher in der Hochrichtung H beabstandet zu dem dritten Längsträger 41 angeordnet ist. Ferner kann der zweite Tragrahmen 4 einen dritten Verbindungsträger 42, welcher den dritten und den vierten Längsträger 41, 42 verbindet, und einen in Bezug auf die Längsrichtung L beabstandet zu dem dritten Längsträger 43 angeordneten vierten Verbindungsträger 44 aufweisen, welcher den dritten und den vierten Längsträger 41, 42 verbindet. Wie insbesondere in den Fign. 1, 2, 5 und 7 weiterhin beispielhaft dargestellt ist, kann der dritte Verbindungsträger 43 sich zwischen einem ersten Endabschnitt 41A des dritten Längsträgers 41 und einem ersten Endabschnitt 42A des viert Längsträgers 42 erstrecken und der der vierte Verbindungsträger 44 kann sich zwischen einem in Bezug auf die Längsrichtung L entgegengesetzt zu dem ersten Endabschnitt 41A gelegenen zweiten Endabschnitt 41B des dritten Längsträgers 41 und einem in Bezug auf die Längsrichtung L entgegengesetzt zu dem ersten Endabschnitt 42A gelegenen zweiten Endabschnitt 42B des vierten Längsträgers 42 erstrecken. Es ist es auch denkbar, dass der dritte Längsträger 41 in Bezug auf die Längsrichtung L mit seinen Endabschnitten 41A, 41B über den dritten Verbindungsträger 43 und/oder über den vierten Verbindungsträger 44 hinaus vorsteht. Selbstverständlich ist es auch denkbar, dass der vierte Längsträger 42 in Bezug auf die Längsrichtung L mit seinen Endabschnitten 42A, 42B über den dritten Verbindungsträger 43 und/oder über den vierten Verbindungsträger 44 hinaus vorsteht. In gleicher Weise können die Querträger 46, 47 auch in über den jeweiligen Verbindungsträger 43, 44 hinausragenden Endabschnitten 42A, 42B des vierten Längsträgers 42 angeordnet sein.

Wie in den Fign. 1, 2, 5 und 7 weiterhin beispielhaft dargestellt ist, kann der zweite Tragrahmen 4 zumindest eine optionale Versteifungsstrebe 48 aufweisen. In den Fign. 1, 2, 5 und 7 ist rein beispielhaft dargestellt, dass eine Versteifungsstrebe 48 vorgesehen ist, welche sich zwischen dem dritten und dem vierten Verbindungsträger 43, 44 erstreckt. Allgemein erstreckt sich die zumindest eine Versteifungsstrebe 48 zwischen zwei Trägern aus der Gruppe bestehend aus dem dritten Längsträger 41, dem vierten Längsträger 42, dem dritten Verbindungsträger 43 und dem vierten Verbindungsträger 44.

Die Längsträger 41, 42, die Verbindungsträger 43, 44 und die Versteifungsstrebe 48 des zweiten Tragrahmens 4 können beispielsweise miteinander verschweißt sein, aus einem Vollmaterial spanend hergestellt, in einem additiven Herstellungsverfahren ausgebildet oder in anderer Weise einstückig hergestellt sein. Selbstverständlich können die Längsträger 41, 42, die Verbindungsträger 43, 44 und die Versteifungsstrebe 48 des zweiten Tragrahmens 4 auch verschraubt, vernietet oder in anderer Weise miteinander verbunden sein.

Wie in den Fign. 2, 5, 6 und 7 beispielhaft dargestellt ist, kann der zweite Tragrahmen 4 zumindest einen zweiten Querträger 46, 47 aufweisen. In den Fign. 2, 5, 6 und 7 ist rein beispielhaft dargestellt, dass ein der zweite Tragrahmen 4 einen in Bezug auf die Längsrichtung L vorderen zweiten Querträger 46 und einen in Bezug auf die Längsrichtung L hinteren zweiten Querträger 47 aufweist, welcher in der Längsrichtung L beabstandet zu dem zweiten vorderen Querträger 46 angeordnet ist. In den Fign. 2, 5, 6 und 7 ist ferner beispielhaft dargestellt, dass der vordere zweite Querträger 46 im ersten Endabschnitt 41A des dritten Längsträgers 41 und der hintere zweite Querträger 47 im zweiten Endabschnitt 42A des dritten Längsträgers 41 angeordnet ist. Wie in den Fign. 2, 5, 6 und 7 weiterhin rein beispielhaft dargestellt ist, kann der der zumindest eine zweite Querträger 46, 47 in Bezug auf die Hochrichtung H im Bereich des dritten Längsträgers 41 angeordnet sein. Unabhängig von der Anordnung der Querträger 46, 47 ist es auch denkbar, dass der dritte Längsträger 41 in Bezug auf die Längsrichtung L mit seinen Endabschnitten 41A, 41B über den dritten Verbindungsträger 43 und/oder über den vierten Verbindungsträger 44 hinaus vorsteht. Die Querträger 46, 47 können in diesem Fall auch in den über den jeweiligen Verbindungsträger 43, 44 hinausragenden Endabschnitten 41A, 41B des dritten Längsträgers 41 angeordnet sein.

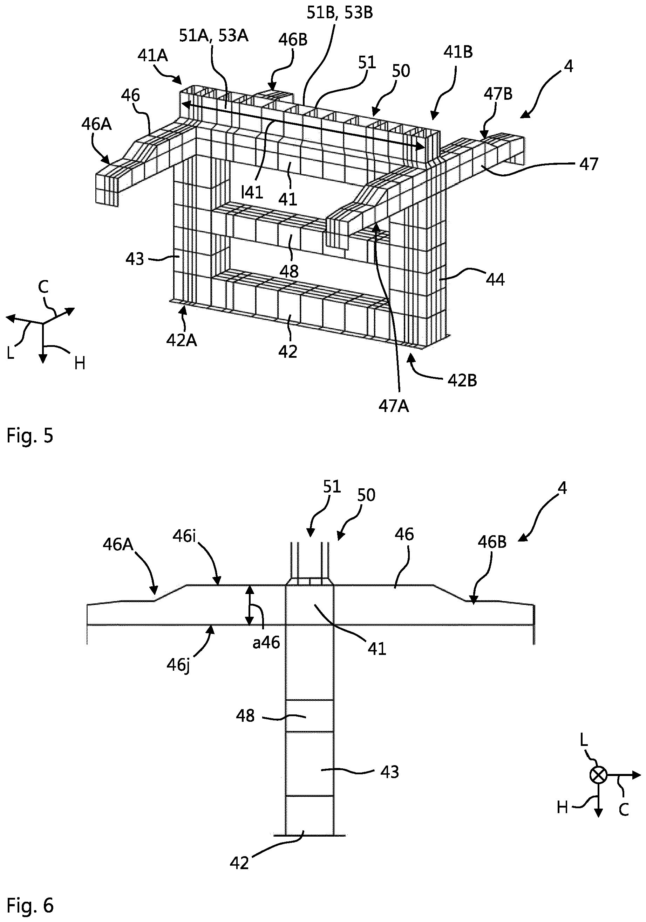

Wie insbesondere in Fig. 6 erkennbar ist, erstreckt sich der zumindest eine zweite Querträger 46, 47 quer zu den Längsträgern 41, 42 bzw. in der Querrichtung C. Die zweiten Querträger 46, 47 können insbesondere jeweils einen ersten Querträgerabschnitt 46A, 47A aufweisen, welcher sich in Bezug auf die Querrichtung C auf einer ersten Seite der Längsträger 41, 42 erstreckt, und einen zweiten Querträgerabschnitt 46B, 47B, welcher sich in Bezug auf die Querrichtung C auf einer zweiten Seite der Längsträger 41, 42 erstreckt, wie dies beispielhaft in den Fign. 2 und 5 bis 7 dargestellt ist. Der erste Querträgerabschnitt 46A, 47A und der zweite Querträgerabschnitt 46B, 47B können sich jeweils symmetrisch in Bezug auf die Längsträger 41, 42 bzw. die Querrichtung C erstrecken. Wie in Fig. 6 rein beispielhaft dargestellt, können der erste Querträgerabschnitt 26A, 27A und der zweite Querträgerabschnitt 46B, 47B jeweils eine entlang der Querrichtung C gestufte Querschnittsform aufweisen. Hierbei kann jeder Querträgerabschnitt 46A, 47A, 46B, 47B eine ebene, in Bezug auf die Hochrichtung H unteren Oberfläche 46j und eine in Bezug auf die in Bezug auf die Hochrichtung H gestuft verlaufende obere Oberfläche 46i aufweisen, wobei ein Abstand a46 zwischen der oberen Oberfläche 46i und der unteren Oberfläche 46j mit zunehmendem Abstand von den Längsträgern 41, 42 stufenweise abnimmt, wie dies in Fig. 6 beispielhaft dargestellt ist.

Der zumindest eine zweite Querträger 46, 47 kann insbesondere einstückig mit dem dritten Längsträger 41 ausgebildet sein, wie dies in den Fign. 3 und 4 schematisch dargestellt ist. Beispielsweise können die Querträgerabschnitte 46A, 46B, 47A, 47B mit dem Längsträger 41 verschweißt sein. Allgemein kann der zumindest eine erste Querträger 46, 47 einstückig mit einem der Träger aus der Gruppe bestehend aus dem dritten Längsträger 41, dem vierten Längsträger 42, dem dritten Verbindungsträger 43 und dem vierten Verbindungsträger 44 ausgebildet sein. Alternativ hierzu kann der zumindest eine zweite Querträger 46, 47 mit einem der Träger aus der Gruppe bestehend aus dem dritten Längsträger 41, dem vierten Längsträger 42, dem dritten Verbindungsträger 43 und dem vierten Verbindungsträger 44 verschraubt, vernietet oder in anderer Weise verbunden sein.

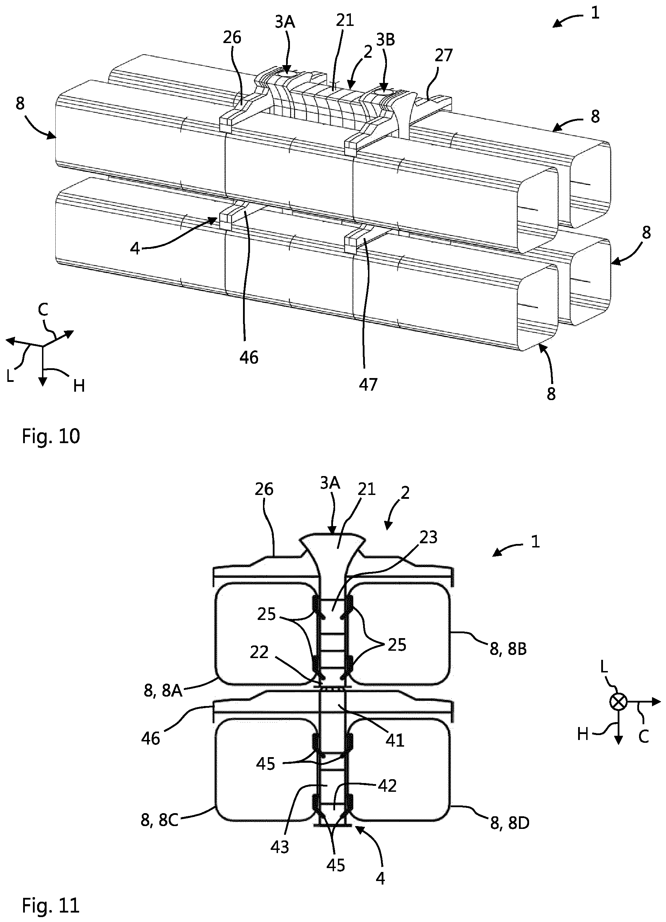

Der zweite Tragrahmen 4 kann ebenfalls zumindest eine Startrohrfixierungsstruktur 45 aufweisen, welche zur Anbringung eines Flugkörperstartrohrs 8 an dem zweiten Tragrahmen 4 dient. In Fig. 11 ist beispielhaft dargestellt, dass zwei Startrohrfixierungen 45 je Startrohr 8jeweils seitlich an dem dritten Verbindungsträger 43 ausgebildet sein können. Selbstverständlich können auch bei dem zweiten Tragrahmen 4 die Startrohrfixierungsstrukturen 45 wie in den Fign. 13 bis 15 für den ersten Tragrahmen 2 gezeigt und oben im Detail erläutert ausgebildet sein.

Die Längsträger 21, 22, 41, 42 die optionalen Verbindungsträger 23, 24, 43, 44 die optionalen Querträger 26, 27, 46, 47 und die optionale Versteifungsstrebe 28, 48 können jeweils als Hohlprofile ausgeführt sein. Die Längsträger 21, 22, 41, 42, die optionalen Verbindungsträger 23, 24, 43, 44, die optionalen Querträger 26, 27, 46, 47 und die optionale Versteifungsstrebe 28, 48 können jeweils einen rechteckförmigen Querschnitt aufweisen, wie dies in den Fign. 1 bis 7 jeweils beispielhaft dargestellt ist. Selbstverständlich sind aber auch andere Querschnittsformen denkbar. Die Längsträger 21, 22, 41, 42 die optionalen Verbindungsträger 23, 24, 43, 44 die optionalen Querträger 26, 27, 46, 47 und die optionale Versteifungsstrebe 28, 48 können jeweils aus einem Metallmaterial, z.B. einer Aluminiumlegierung, einem Baustahl, einer Titanlegierung oder aus einem ähnlichen hochfesten Material gebildet sein.

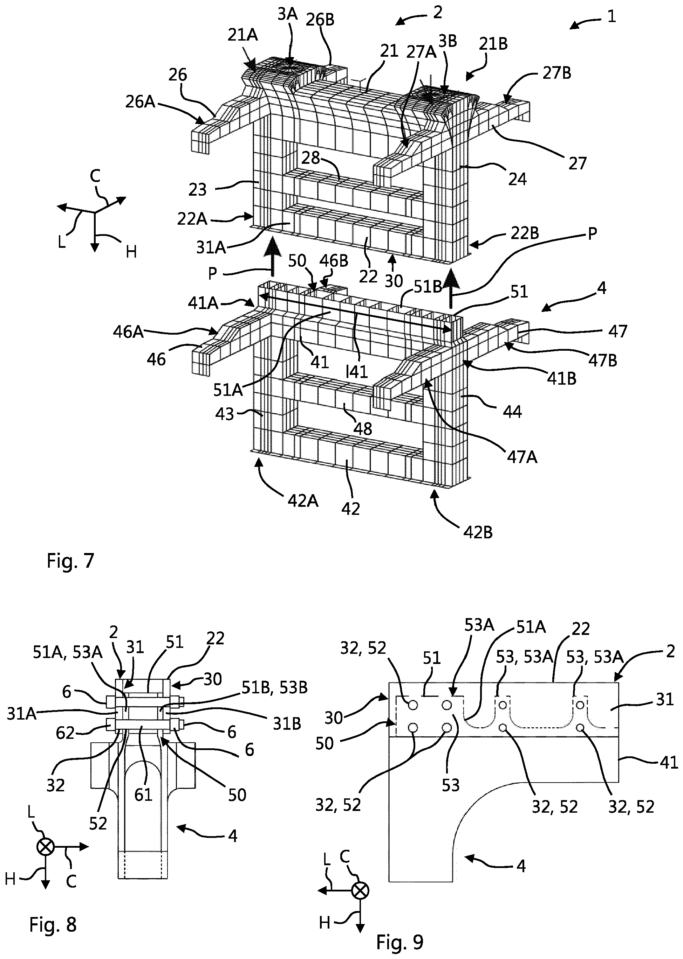

Wie in den Fign. 4, 8 und 9 beispielhaft und rein schematisch dargestellt, weist der zweite Längsträger 22 des ersten Tragrahmens 2 an einer in Bezug auf die Hochrichtung H abgewandt von dem ersten Längsträger 21 orientierten Unterseite eine erste Verbindungsstruktur 30 auf. Korrespondieren hierzu weist der dritte Längsträger 41 des optionalen zweiten Tragrahmens 4 an einer Oberseite, welche in Bezug auf die Hochrichtung H entgegengesetzt zu dem optionalen vierten Längsträger 42 orientiert ist, eine zweite Verbindungsstruktur 50 auf, wie dies beispielhaft und rein schematisch in den Fign. 5 bis 9 gezeigt ist. Wie anhand der Fign. 7 bis 9 erkennbar ist, sind der erste Tragrahmen 2 und der zweite Tragrahmen 4 mit Hilfe der ersten und der zweiten Verbindungsstruktur 30, 50 miteinander verbindbar bzw. aneinander befestigbar.

Die erste Verbindungsstruktur 30 definiert einen sich in der Längsrichtung L erstreckenden ersten Steckverbindungsabschnitt 31, welcher dazu eingerichtet ist, mit einem komplementär ausgebildeten zweiten Steckverbindungsabschnitt 51 der zweiten Verbindungsstruktur 50 des zweiten Tragrahmens 4 eine Steckverbindung einzugehen. Wie in den Fign. 4, 8 und 9 beispielhaft dargestellt ist, kann der erste Steckverbindungsabschnitt 31 beispielsweise als eine sich in der Längsrichtung L erstreckende Ausnehmung und somit als Buchse ausgebildet sein. Die Ausnehmung kann hierbei, wie insbesondere in den Fign. 4 und 8 beispielhaft dargestellt, durch einander in der Querrichtung C gegenüberliegende Profilseitenwandungen 31A, 31B des zweiten Längsträgers 22 definiert sein. Alternativ ist auch denkbar, dass der erste Steckverbindungsabschnitt 31 durch eine von der Unterseite des zweiten Längsträgers 22 in der Hochrichtung H vorstehende Laschenanordnung (nicht dargestellt), also als sich in der Längsrichtung L erstreckender Stecker ausgebildet ist. Die Verbindungsstruktur 30 kann somit durch einen in Bezug auf die Hochrichtung H unteren Endabschnitt des ersten Tragrahmens 2, insbesondere des zweiten Längsträgers 22 ausgebildet sein.

Die erste Verbindungsstruktur 30 definiert somit allgemein einen sich in der Längsrichtung L erstreckenden ersten Steckverbindungsabschnitt 31. Dieser kann sich beispielsweise im Wesentlichen über die gesamte Längserstreckung des zweiten Längsträgers 22 erstrecken. Allgemein kann vorgesehen sein, dass sich der erste Steckverbindungsabschnitt 31, also z.B. die durch die Profilseitenwandungen 31A, 31B definierte Ausnehmung, in Bezug auf die Längsrichtung L über zumindest 80 Prozent einer Länge l22 des zweiten Längsträgers 22 erstreckt.

Wie in Fig. 9 dargestellt ist, weist die erste Verbindungsstruktur 30 zumindest zwei in der Längsrichtung L beabstandete erste Durchgangsbohrungen 32 auf. Wie in den Fign. 8 und 9 beispielhaft dargestellt ist, können die Durchgangsbohrungen 32 in den Profilseitenwandungen 31A, 31B ausgebildet sein und diese vollständig durchdringen. Allgemein können die Durchgangsbohrungen 32 sich jeweils in der Querrichtung C erstrecken. In Fig. 9 ist beispielhaft dargestellt, dass entlang der Längsrichtung L eine Vielzahl erster Durchgangsbohrungen 32 (in Fig. 9 sind vier Durchgangsbohrungen sichtbar) vorgesehen ist. Optional kann eine in Bezug auf die Hochrichtung H untere Reihe an ersten Durchgangsbohrungen 32 und eine obere Reihe an ersten Durchgangsbohrungen 32 vorgesehen sein, welche in Bezug auf die Hochrichtung H beabstandet zu der ersten Reihe angeordnet ist, wie dies in Fig. 9 beispielhaft dargestellt ist.

Die zweite Verbindungsstruktur 50 definiert ebenfalls einen sich in der Längsrichtung L erstreckenden zweiten Steckverbindungsabschnitt 51, welcher komplementär zu dem ersten Steckverbindungsabschnitt 31 ausgebildet, so dass dieser an den ersten Steckverbindungsabschnitt 31 des ersten Tragrahmens 2 in der Hochrichtung H ansteckbar ist, wie dies in Fig. 7 durch die Pfeile P symbolisch angezeigt ist. Wie in den Fign. 5, 6, 8 und 9 beispielhaft dargestellt ist, kann der zweite Steckverbindungsabschnitt 51 beispielsweise als eine sich in der Längsrichtung L erstreckende Laschenanordnung und somit als Stecker ausgebildet sein. In Fig. 5 ist beispielhaft dargestellt, dass die Laschenanordnung durch zwei in Bezug auf die Querrichtung einander gegenüberliegende Wandungen 51A, 51B gebildet sein kann, die sich in der Längsrichtung L durchgehend zwischen dem ersten und dem zweiten Endabschnitt 41A, 41B des dritten Längsprofils 41 erstrecken und von der Oberseite des dritten Längsprofils 41 in der Hochrichtung H vorstehen. Die Wandungen 51A, 52A bilden hierbei in Bezug auf die Querrichtung einander gegenüberliegende Laschenprofile 53A, 53B aus. In Fig. 9 ist beispielhaft eine Laschenanordnung gezeigt, welche mehrere in Bezug auf die Längsrichtung L zueinander beabstandete Laschenabschnitte 53 aufweist, die jeweils von der Oberseite des dritten Längsprofils 41 in der Hochrichtung H vorstehen. Die Laschenabschnitte 53 bilden gemeinsam eine Laschenprofil 53A. Wie in Fig. 8 beispielhaft dargestellt ist, kann die Laschenanordnung allgemein zwei in der Querrichtung C beabstandete, einander gegenüberliegende Laschenprofile 53A, 53B aufweisen. Alternativ ist auch denkbar, dass der zweite Steckverbindungsabschnitt 51 durch eine an der Oberseite des dritten Längsträgers 41 ausgebildete, sich in der Längsrichtung L erstreckende Ausnehmung (nicht dargestellt), also als Buchse ausgebildet ist. Die zweite Verbindungsstruktur 50 kann somit durch einen in Bezug auf die Hochrichtung H oberen Endabschnitt des zweiten Tragrahmens 4, insbesondere des dritten Längsträgers 42 ausgebildet sein.

Die zweite Verbindungsstruktur 50 definiert somit allgemein einen sich in der Längsrichtung L erstreckenden zweiten Steckverbindungsabschnitt 51. Dieser kann sich beispielsweise im Wesentlichen über die gesamte Längserstreckung des dritten Längsträgers 41 erstrecken. Allgemein kann vorgesehen sein, dass der zweite Steckverbindungsabschnitt 51, also z.B. die durch die Profilseitenwandungen 51A, 51B definierte Laschenanordnung oder die Laschenprofile 53A, 53B, sich in Bezug auf die Längsrichtung L über zumindest 80 Prozent einer Länge l41 des dritten Längsträgers 41 erstreckt.

Wie in Fig. 9 beispielhaft dargestellt ist, weist die zweite Verbindungsstruktur 50 zumindest zwei in der Längsrichtung L beabstandete zweite Durchgangsbohrungen 52 auf. Die zweiten Durchgangsbohrungen 52 sind korrespondierend zu den ersten Durchgangsbohrungen 32 der ersten Verbindungsstruktur 30 angeordnet. Das heißt, wenn der erste und der zweite Steckprofilabschnitt 31, 51 ineinander gesteckt sind, wie dies in den Fign. 8 und 9 beispielhaft dargestellt ist, sind die ersten und die zweiten Durchgangsbohrungen 32, 52 fluchtend bzw. koaxial zueinander angeordnet. Wie in den Fign. 8 und 9 beispielhaft dargestellt ist, können die zweiten Durchgangsbohrungen 52 in den Laschenabschnitten 53 oder allgemein in den Laschenprofilen 53A, 53B ausgebildet sein und diese vollständig durchdringen. Allgemein können die Durchgangsbohrungen 52 sich jeweils in der Querrichtung C erstrecken. In Fig. 9 ist beispielhaft dargestellt, dass entlang der Längsrichtung L eine Vielzahl zweiter Durchgangsbohrungen 52 (in Fig. 9 sind vier Durchgangsbohrungen sichtbar) vorgesehen ist. Optional kann eine in Bezug auf die Hochrichtung H untere Reihe an zweiten Durchgangsbohrungen 52 und eine obere Reihe an zweiten Durchgangsbohrungen 52 vorgesehen sein, welche in Bezug auf die Hochrichtung H beabstandet zu der ersten Reihe angeordnet ist, wie dies in Fig. 9 beispielhaft dargestellt ist.

Wie in Fig. 7 beispielhaft dargestellt ist, können der erste Tragrahmen 2 und der optionale zweite Tragrahmen 4 auf einfache Weise aneinander gesteckt werden, wie dies durch die Pfeile P angedeutet ist. Hierzu wird der zweite Steckverbindungsabschnitt 51 des zweiten Tragrahmens 4 in der Hochrichtung H an den ersten Steckverbindungsabschnitt 31 des ersten Tragrahmens 2 angesteckt. In dem in Fig. 7 gezeigten Beispiel wird insbesondere die durch die Profilseitenwandungen 51A, des definierte Laschenanordnung des zweiten Tragrahmens 4 in die durch die Profilseitenwandungen 31A, 31B des zweiten Längsträgers 22 des ersten Tragrahmens 2 definierte Ausnehmung eingeführt.

Zur Befestigung der aneinander gesteckten bzw. der ineinander geschobenen Steckverbindungsabschnitte 31, 51 aneinander, werden Verbindungseinrichtungen 6 durch die Durchgangsbohrungen 32, 52 durchgeführt, wie dies in Fig. 8 schematisch dargestellt ist. Die Verbindungseinrichtungen 6 können, wie bereits beschrieben, als Bolzen, Nieten, Schrauben oder dergleichen ausgeführt sein. Allgemein weisen die Verbindungseinrichtungen 6 somit einen Schaft 61 auf, welcher durch die Durchgangsbohrungen 32, 52 durchführbar ist. Eine Fixierung der Verbindungseinrichtung 6 in Bezug auf die Querrichtung kann beispielsweise mittels Schraubmuttern 62 erfolgen, wie dies in Fig. 8 beispielhaft und schematisch dargestellt ist.

In Vorteil der sich jeweils in der Längsrichtung L erstreckenden Steckverbindungsabschnitte 31, 51 liegt darin, dass eine mechanisch sehr robuste, insbesondere verwindungssteife Steckverbindung zwischen den Tragrahmen 2, 4 erzielt wird. Weiterhin wird die Montage der Tragrahmen 2, 4 aneinander erleichtert, wie dies oben beschrieben wurde. Somit kann das Startsystem 1 auf einfache Weise umkonfiguriert werden, wie nachfolgend noch genauer erläutert wird.

In Fig. 10 ist beispielhaft ein Flugkörperstartsystem 1 gezeigt, welches einen ersten und einen zweiten Tragrahmen 2, 4 sowie jeweils zwei an dem ersten Tragrahmen 2 und zwei an dem zweiten Tragrahmen 4 befestigte Startrohre 8 aufweist. In Fig. 11 ist eine Schnittansicht des in Fig. 10 beispielhaft gezeigten Systems 1 dargestellt. Die Tragrahmen 2, 4 können wie voranstehend beschrieben ausgebildet sein und an deren Verbindungsabschnitten 30, 50 mittels der ineinander gesteckten Steckverbindungsabschnitte 31, 51 sowie den Verbindungseinrichtungen (in den Fign. 10 und 11 nicht dargestellt) aneinander befestigt sein. Die in den Fign. 10 und 11 beispielhaft dargestellten Tragrahmen 2, 4 weisen jeweils einen vorderen Querträger 26, 46 und einen hinteren Querträger 27, 47 auf.

Die Startrohre 8 erstrecken sich jeweils entlang der Längsrichtung L. Wie in den Fign. 10 und 11 beispielhaft dargestellt, können die Startrohre 8 jeweils einen im rechteckförmigen Querschnitt mit abgerundeten Ecken aufweisen. Selbstverständlich sind auch andere Querschnittsformen denkbar, z.B. können die Startrohre 8 einen kreisförmigen Querschnitt aufweisen. Die Startrohre 8 können beispielsweise aus einem dünnen Blech geformt sein, welches die Querschnittsform des Startrohrs 8 definiert. Als Material kommt beispielsweise ein Metallmaterial, z.B. ein Baustahl oder eine Aluminiumlegierung in Frage.

Wie insbesondere in Fig. 11 dargestellt ist, ist ein erstes Startrohr 8, 8A in Bezug auf die Querrichtung C an einer ersten Seite des ersten Tragrahmens 2 angeordnet. Ein zweites Startrohr 8, 8B ist in Bezug auf die Querrichtung C an einer entgegengesetzt zu der ersten Seite gelegenen zweiten Seite des ersten Tragrahmens 2 angeordnet. Wie in Fig. 11 erkennbar, kann vorgesehen sein, dass die Startrohre 8A, 8B sich in Bezug auf die Hochrichtung H im Wesentlichen über die gesamte Länge des ersten Verbindungsträgers 23 oder allgemein über einen Abstand zwischen dem ersten und dem zweiten Längsträger 21, 22 erstrecken. Die Startrohre 8A, 8B sind jeweils über eine Startrohrfixierungsstruktur 25 des ersten Tragrahmens 2 mit diesem verbunden. Wie in Fig. 11 beispielhaft dargestellt ist, können die Startrohre 8A, 8B jeweils mit einer an den Verbindungsträgern 23, 24 angeordneten Startrohrfixierungsstruktur 25 verbunden sein. Selbstverständlich sind auch andere Anordnungen der Startfixierungsstruktur 25 und damit der Befestigung der Startrohre 8A, 8B an dem ersten Tragrahmen 2 denkbar, wie dies z.B. in den Fign. 13 bis 15 dargestellt ist.

Wie in Fig. 11 weiterhin dargestellt ist, ist ein drittes Startrohr 8, 8C in Bezug auf die Querrichtung C an einer ersten Seite des zweiten Tragrahmens 4 angeordnet.

Ein viertes Startrohr 8, 8D ist in Bezug auf die Querrichtung C an einer entgegengesetzt zu der ersten Seite gelegenen zweiten Seite des zweiten Tragrahmens 4 angeordnet. Wie in Fig. 11 erkennbar, kann vorgesehen sein, dass die Startrohre 8C, 8D sich in Bezug auf die Hochrichtung H im Wesentlichen über die gesamte Länge des dritten Verbindungsträgers 43 oder allgemein über einen Abstand zwischen dem dritten und dem vierten Längsträger 41, 42 erstrecken. Die Startrohre 8C, 8D sind jeweils über eine Startrohrfixierungsstruktur 45 des zweiten Tragrahmens 4 mit diesem verbunden. Wie in Fig. 11 beispielhaft dargestellt ist, können die Startrohre 8C, 8C jeweils mit einer an den Verbindungsträgern 43, 44 angeordneten Startrohrfixierungsstruktur 45 verbunden sein. Selbstverständlich sind auch andere Anordnungen der Startfixierungsstruktur 45 und damit der Befestigung der Startrohre 8C, 8D an dem zweiten Tragrahmen 4 denkbar. Die in den Fign. 13 bis 15 beispielhaft für den ersten Tragrahmen 2 dargestellten Anordnungen der Startrohrfixierungsstruktur 25 können in gleicher Weise auch an dem zweiten Tragrahmen 4 vorgesehen sein.

In Fig. 12 ist beispielhaft ein Flugkörperstartsystem 1 gezeigt, welches lediglich einen ersten Tragrahmen 2 mit jeweils zwei an diesem angebrachten Startrohren 8 aufweist. Das in Fig. 12 beispielhaft gezeigte System 1 kann auf einfache Weise zu dem in den Fign. 10 und 11 gezeigten System 1 umgebaut werden, indem ein zweiter Tragrahmen 4, wie voranstehend erläutert, in der Hochrichtung H an den Verbindungsabschnitt 30 des ersten Tragrahmens 2 angesteckt wird. Damit kann auf einfache Weise ein 2-fach Startsystem auf ein 4-fach Startsystem umgerüstet werden. Die im Zusammenhang mit den Fign. 10 und 11 erläuterten Zusammenhänge betreffend die Startrohre 8 und deren Anbringung an dem Tragrahmen 2 gelten auch für das in Fig. 12 beispielhaft gezeigte System 1. In den Fign. 13 bis 15 sind weitere mögliche Anordnungen der Startrohrfixierungsstruktur 25 an dem ersten Tragrahmen 2 gezeigt, welche bereits erläutert wurden.

In Fig. 16 ist beispielhaft ein weiteres Flugkörperstartsystem 1 dargestellt. Das in Fig. 16 gezeigte System 1 entspricht dem in Fig. 10 gezeigten System 1 und weist zusätzlich eine optionale aerodynamische Verkleidung 60 sowie ebenfalls optionale Startrohrabdeckungen 70 auf. Die Verkleidung 60 ist in Bezug auf die Längsrichtung L an einem vorderen Endbereich der Startrohre 8 angeordnet. Wie in Fig. 16 beispielhaft dargestellt, kann sich die Verkleidung 60 entlang der Längsrichtung L erstrecken und im Bereich des ersten Endabschnitts 21A des ersten Längsträgers 21 des ersten Tragrahmens 2 enden. Ferner erstreckt sich die Verkleidung 60 jeweils vorzugsweise um den gesamten, gemeinsamen Umfang der mit den Tragrahmen 2, 4 verbundenen Startrohre 8. Die Verkleidung 60 kann insbesondere an den ersten Verbindungsträgern 23, 43 oder an den optionalen Querträgern 26, 46 der Tragrahmen 2, 4 befestigt sein, z.B. mit diesen verschraubt oder in ähnlicher Weise verbunden. Die Verkleidung 60 kann als Blechformteil aus einem Metallmaterial oder als Formteil aus einem Faserverbundmaterial, z.B. einem kohlefaserverstärkten Kunststoff, gebildet sein. Eine optionale elektronische Schnittstelle 9 des Startsystems 1, welche mit einer elektronischen Schnittstelle (nicht dargestellt) der mobilen Plattform 100 verbindbar ist, kann in einen Aufnahmeabschnitt 61 der Verkleidung 60 angeordnet sein, wie dies in Fig. 16 rein beispielhaft dargestellt ist. Eine solche optionale elektronische Schnittstelle 9 kann beispielsweise auch in den ersten Längsträger 21 des ersten Tragrahmens 2 integriert sein, z.B. in die vorspringenden Bereiche 5A, 5B und damit räumlich nahe bei den Plattform-Kopplungsstrukturen 3A, 3B. Wie in Fig. 16 weiterhin beispielhaft gezeigt ist, können auch optionale Sensoren 10, z.B. in Form von Antennen oder dergleichen, in dem Aufnahmeabschnitt 61 oder allgemein in der Verkleidung 60 angeordnet sein. Selbstverständlich können die Sensoren 10 auch in andere Komponenten des Systems 1 integriert werden.

Die optionalen Startrohrabdeckungen 70 sind in Bezug auf die Längsrichtung L an einem vorderen Ende der Startrohre 8 angeordnet und jeweils mittels eines Scharniers 71 zwischen einer geschlossenen Stellung, in welcher diese eine Frontöffnung des jeweiligen Startrohrs 8 abdecken, und einer offenen Stellung, in welcher diese die Frontöffnung des jeweiligen Startrohrs 8 freigeben, schwenkbar gelagert. In Fig. 16 sind Startrohrabdeckungen 70 die beispielhaft in einem geschlossenen Zustand gezeigt ist. Wie dies in Fig. 16 beispielhaft dargestellt ist, können die optionalen Startrohrabdeckungen 70 mittels der Scharniere 71 jeweils an der Verkleidung 60 drehbar gelagert sein. Alternativ ist auch denkbar, die Startrohrabdeckungen 70 direkt an den Startrohren 8 drehbar zu lagern. Zum Bewegen der Startrohrabdeckungen 70 zwischen der geschlossenen und der offenen Stellung können Aktuatoren 72, z.B. elektromechanische, hydraulische oder pneumatisch Aktuatoren, vorgesehen sein. Diese können beispielsweise an der optionalen Verkleidung 60, an den Startrohren 8 oder an den Tragrahmen 2, 4 angeordnet sein. In Fig. 16 ist beispielhaft gezeigt, dass die Aktuatoren 72 an der Verkleidung 60 angeordnet sind.

Die in Fig. 17 beispielhaft dargestellte mobile Plattform 100 in Form eines Helikopters weist zwei Flugkörperstartsysteme 1 auf, die wie oben beschrieben realisiert sein können. Wie in Fig. 17 symbolisch dargestellt, kann jeweils der erste Tragrahmen 2 mittels der Plattform-Kopplungsstruktur 3A, 3B mit einer Tragstruktur 103 der Plattform 100 lösbar verbunden sein. In Fig. 17 sind die Tragstrukturen 103 rein beispielhaft und lediglich symbolisch als seitliche Traversen dargestellt.

In Fig. 18 ist rein beispielhaft eine mögliche lösbare Verbindung zwischen dem Startsystem 1 und der mobilen Plattform 100 dargestellt. Beispielsweise kann an der Tragstruktur 103 der Plattform 100 ein drehbar gelagerter Haken 104 vorgesehen sein, welcher in die in diesem Beispiel als Lasche realisierte Plattform-Kopplungsstruktur 3A, 3B des ersten Tragrahmens 2 eingreift.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar, soweit sie in den Anwendungsbereich der beigefügten Ansprüche fallen.

### BEZUGSZEICHENLISTE

- 1: Flugkörperstartsystem
- 2: erster Tragrahmen
- 3A: erste Plattform-Kopplungsstruktur
- 3B: zweite Plattform-Kopplungsstruktur
- 4: zweiter Tragrahmen
- 5A, 5B: vorspringende Bereiche
- 6: Verbindungseinrichtungen
- 8: Flugkörperstartrohr
- 8A-8D: erstes bis viertes Startrohr
- 9: elektronische Schnittstelle
- 10: Sensoren
- 21: erster Längsträger
- 21A: erster Endabschnitt des ersten Längsträgers
- 21B: zweiter Endabschnitt des ersten Längsträgers
- 22: zweiter Längsträger
- 22A: erster Endabschnitt des zweiten Längsträgers
- 22B: zweiter Endabschnitt des zweiten Längsträgers
- 23: erster Verbindungsträger
- 24: zweiter Verbindungsträger
- 25: Startrohrfixierungsstruktur
- 26, 27: erste Querträger des ersten Tragrahmens
- 26A: erster Querträgerabschnitt des vorderen ersten Querträgers
- 26B: zweiter Querträgerabschnitt des vorderen ersten Querträgers
- 26i: obere Oberfläche
- 26j: untere Oberfläche
- 27A: erster Querträgerabschnitt des hinteren ersten Querträgers
- 27B: zweiter Querträgerabschnitt des hinteren ersten Querträgers
- 28: Versteifungsstrebe
- 30: erste Verbindungsstruktur
- 31: erster Steckverbindungsabschnitt
- 31A, 31B: Profilseitenwandungen
- 32, 52: Durchgangsbohrungen
- 41: dritter Längsträger
- 41A: erster Endabschnitt des dritten Längsträgers
- 41B: zweiter Endabschnitt des dritten Längsträgers
- 42: vierter Längsträger
- 42A: erster Endabschnitt des vierten Längsträgers
- 42B: zweiter Endabschnitt des vierten Längsträgers
- 43: dritter Verbindungsträger
- 44: vierter Verbindungsträger
- 46, 47: zweite Querträger des zweiten Tragrahmens
- 46A: erster Querträgerabschnitt des vorderen zweiten Querträgers
- 46B: zweiter Querträgerabschnitt des vorderen zweiten Querträgers
- 46i: obere Oberfläche
- 46j: untere Oberfläche
- 47A: erster Querträgerabschnitt des hinteren zweiten Querträgers
- 47B: zweiter Querträgerabschnitt des hinteren zweiten Querträgers
- 48: Versteifungsprofil
- 50: zweite Verbindungsstruktur
- 51: zweiter Steckverbindungsabschnitt
- 51A, 51B: Wandungen
- 53: Laschenabschnitte
- 53A, 53B: Laschenprofile
- 60: Verkleidung
- 70: Startrohrabdeckungen
- 71: Scharniere
- 100: mobile Plattform
- 103: Tragstrukturen
- 104: Haken

- a26: Abstand
- a46: Abstand
- C: Querrichtung
- H: Hochrichtung
- L: Längsrichtung
- l22: Länge des zweiten Längsträgers
- P: Pfeile

## Patentansprüche

1. Modulares Flugkörperstartsystem (1) zum Starten von Flugkörpern von einer mobilen Plattform (100) aus mit einem rechteckförmigen ersten Tragrahmen (2), welcher aufweist:
einen sich in einer Längsrichtung (L) erstreckenden ersten Längsträger (21), an welchem zumindest eine Plattform-Kopplungsstruktur (3A; 3B) zur lösbaren Befestigung des ersten Tragrahmens (2) an der mobilen Plattform (100) ausgebildet ist;
einen sich entlang der Längsrichtung (L) erstreckenden zweiten Längsträger (22), welcher in einer quer zur Längsrichtung (L) verlaufenden Hochrichtung (H) beabstandet zu dem ersten Längsträger (21) angeordnet ist und an einer abgewandt zu dem ersten Längsträger (21) orientierten Unterseite eine erste Verbindungsstruktur (30) aufweist, wobei die erste Verbindungsstruktur (30) einen sich in der Längsrichtung (L) erstreckenden ersten Steckverbindungsabschnitt (31) definiert, an welchen ein zweiter Tragrahmen (4) mit einem komplementär zu dem ersten Steckverbindungsabschnitt (31) ausgebildeten zweiten Steckverbindungsabschnitt (51) in der Hochrichtung (H) ansteckbar ist, und zumindest zwei in der Längsrichtung (L) beabstandete erste Durchgangsbohrungen (32) aufweist, durch welche jeweils eine Verbindungseinrichtung (6) durchführbar ist, um den ersten und den zweiten Tragrahmen (2; 4) aneinander zu fixieren, wenn der zweite Tragrahmen (4) an den ersten Tragrahmen (2) angesteckt ist; und
zumindest eine Startrohrfixierungsstruktur (25) zur Anbringung eines Flugkörperstartrohrs (8) an dem ersten Tragrahmen (2).

2. System (1) nach Anspruch 1, wobei der erste Steckverbindungsabschnitt (31) durch eine an der Unterseite des zweiten Längsträgers (22) ausgebildete Ausnehmung oder durch eine von der Unterseite des zweiten Längsträgers (22) in der Hochrichtung (H) vorstehende Laschenanordnung ausgebildet ist.

3. System (1) nach Anspruch 1 oder 2, wobei der erste Steckverbindungsabschnitt (31) sich in Bezug auf die Längsrichtung über zumindest 80 Prozent einer Länge (l22) des zweiten Längsträgers (22) erstreckt.

4. System (1) nach einem der voranstehenden Ansprüche, wobei der erste Tragrahmen (2) zumindest einen sich quer zu den Längsträgern erstreckenden ersten Querträger (26; 27) aufweist.

5. System (1) nach Anspruch 4, wobei zumindest eine Startrohrfixierungsstruktur (25) des ersten Tragrahmens (2) an dem ersten Querträger (26; 27) ausgebildet ist.

6. System (1) nach Anspruch 4 oder 5, wobei der zumindest eine erste Querträger (26; 27) einstückig mit einem der Träger aus der Gruppe bestehend aus dem ersten Längsträger (21), dem zweiten Längsträger (22), einem den ersten und den zweiten Längsträger (21; 22) verbindenden ersten Verbindungsträger (23) und einem den ersten und den zweiten Längsträger (21; 22) verbindenden zweiten Verbindungsträger (24) ausgebildet ist.

7. System (1) nach einem der Ansprüche 4 bis 6, wobei der zumindest eine erste Querträger (26; 27) in Bezug auf die Hochrichtung (H) im Bereich des ersten Längsträgers (21) angeordnet ist.

8. System (1) nach einem der voranstehenden Ansprüche, wobei der erste Tragrahmen (2) zusätzlich zumindest eine Versteifungsstrebe (28) aufweist, welche sich zwischen zwei Trägern aus der Gruppe bestehend aus dem ersten Längsträger (21), dem zweiten Längsträger (22), einem den ersten und den zweiten Längsträger (21; 22) verbindenden ersten Verbindungsträger (23) und einem den ersten und den zweiten Längsträger (21; 22) verbindenden zweiten Verbindungsträger (24) erstreckt.

9. System (1) nach einem der voranstehenden Ansprüche, zusätzlich aufweisend:
zumindest ein Startrohr (8), welches mit der zumindest einen Startrohrfixierungsstruktur (25) des ersten Tragrahmens (2) verbindbar oder verbunden ist.

10. System (1) nach einem der voranstehenden Ansprüche, zusätzlich aufweisend zumindest zwei Verbindungseinrichtungen (6) und einen rechteckförmigen zweiten Tragrahmen (4), welcher aufweist:
einen sich in einer Längsrichtung (L) erstreckenden dritten Längsträger (41), welcher an einer Oberseite eine zweite Verbindungsstruktur (50) aufweist, wobei die zweite Verbindungsstruktur (50) einen sich in der Längsrichtung (L) erstreckenden, komplementär zu dem ersten Steckverbindungsabschnitt (31) ausgebildeten zweiten Steckverbindungsabschnitt (51) definiert, welcher an den ersten Steckverbindungsabschnitt (31) des ersten Tragrahmens (2) in der Hochrichtung (H) ansteckbar ist, und zumindest zwei in der Längsrichtung (L) korrespondierend zu den ersten Durchgangsbohrungen (32) angeordnete zweite Durchgangsbohrungen (52) aufweist, wobei die Verbindungseinrichtungen (6) jeweils durch die ersten und die zweiten Durchgangsbohrungen (32; 52) durchführbar sind, um den ersten und den zweiten Tragrahmen (2; 4) aneinander zu fixieren, wenn der zweite Tragrahmen (4) an den ersten Tragrahmen (2) angesteckt ist, und zumindest einer Startrohrfixierungsstruktur (45) zur Anbringung eines Flugkörperstartrohrs (8) an dem zweiten Tragrahmen (4).

11. System (1) nach Anspruch 10, wobei der zweite Steckverbindungsabschnitt (50) durch eine von der Oberseite des dritten Längsträgers (41) in der Hochrichtung (H) vorstehende Laschenanordnung oder durch eine an der Oberseite des dritten Längsträgers (41) ausgebildete Ausnehmung ausgebildet ist.

12. System (1) nach Anspruch 10 oder 11, wobei der zweite Steckverbindungsabschnitt (50) sich in Bezug auf die Längsrichtung über zumindest 80 Prozent einer Länge (l41) des dritten Längsträgers (41) erstreckt.

13. System (1) nach einem der voranstehenden Ansprüche, wobei die Durchgangsbohrungen (32; 52) sich jeweils in einer quer zu der Hochrichtung (H) und zu der Längsrichtung (L) erstreckenden Querrichtung (C) erstrecken.

## Claims

1. Modular missile launch system (1) for launching missiles from a mobile platform (100) consisting of a rectangular first support frame (2), comprising:
a first longitudinal support (21) extending in a longitudinal direction (L), on which at least one platform coupling structure (3A; 3B) for detachably fixing the first support frame (2) to the mobile platform (100) is formed;
a second longitudinal support (22) extending in the longitudinal direction (L), which is arranged spaced apart from the first longitudinal support (21) in a vertical direction (H) extending transverse to the longitudinal direction (L) and has, on a lower face orientated away from the first longitudinal structure (21), a first connecting structure (30), the first connecting structure (30) defining a first plug-in connection portion (31) extending in the longitudinal direction (L), onto which a second support frame (4), having a second plug-in connection portion (51) formed complementary to the first plug-in connection portion (31), can be plugged in the vertical direction (H), and at least two through-holes (32) spaced apart in the longitudinal direction (L), through each of which a connecting device (6) can be passed so as to fix the first and second support frames (2; 4) to one another when the second support frame (4) is plugged onto the first support frame (2); and
at least one launching tube fixing structure (25) for attaching a missile launching tube (8) to the first support frame (2).

2. System (1) according to claim 1, wherein the first plug-in connection portion (31) is formed by a recess formed on the lower face of the second longitudinal support (22) or by a strap arrangement protruding in the vertical direction (H) from the lower face of the second longitudinal support (22) .

3. System (1) according to either claim 1 or claim 2, wherein the first plug-in connection portion (31) extends over at least 80 percent of a length (122) of the second longitudinal support (22) in terms of the longitudinal direction.

4. System (1) according to any of the preceding claims, wherein the first carrier frame (2) has at least one first transverse support (26; 27) extending transverse to the longitudinal supports.

5. System (1) according to claim 4, wherein at least one launching tube fixing structure (25) of the first support frame (2) is formed on the first transverse carrier (26; 27) .

6. System (1) according to either claim 4 or claim 5, wherein the at least one first transverse support (26; 27) is formed integral with one of the supports from the group consisting of the first longitudinal support (21), the second longitudinal support (22), a first connecting support (23) connecting the first and second longitudinal supports (21; 22), and a second connecting support (24) connecting the first and second longitudinal supports (21; 22).

7. System (1) according to any of claims 4 to 6, wherein the at least one first transverse support (26; 27) is arranged in the region of the first longitudinal support (21) in terms of the vertical direction (H).

8. System (1) according to any of the preceding claims, wherein the first support frame (2) additionally comprises at least one reinforcing strut (28), which extends between two supports from the group consisting of the first longitudinal support (21), the second longitudinal support (22), a first connecting support (23) connecting the first and second longitudinal supports (21; 22), and a second connecting support (24) connecting the first and second longitudinal supports (21; 22).

9. System (1) according to any of the preceding claims, additionally comprising:
at least one launching tube (8) connectable or connected to the at least one launching tube fixing structure (25) of the first support frame (2).

10. System (1) according to any of the preceding claims, additionally comprising at least two connecting devices (6) and a rectangular second support frame (4), which comprises:
a third longitudinal support (41) extending in the longitudinal direction, which comprises on the upper face a second connecting structure (50), the second connecting structure (50) defining a second plug-in connection portion (51) extending in the longitudinal direction (L), which is formed complementary to the first plug-in connection portion (31) and can be plugged onto the first plug-in connection portion (31) of the first support frame (2) in the vertical direction (H), and has at least two second through-holes (52) arranged in the longitudinal direction (L) in a manner corresponding to the first through-holes (32), the connecting devices (6) being passable through the first and second through-holes (32; 52) respectively, so as to fix the first and second support frames (2; 4) to one another, when the second support frame (4) is plugged onto the first support frame (2), and at least one launching tube fixing structure (45) for attaching a missile launching tube (8) to the second support frame (4).

11. System (1) according to claim 10, wherein the second plug-in connection portion (50) is formed by a strap arrangement protruding in the vertical direction (H) from the upper face of the third longitudinal support (41) or by a recess formed on the upper face of the third longitudinal support (41) .

12. System (1) according to either claim 10 or claim 11, wherein the second plug-in connection portion (50) extends over at least 80 percent of a length (141) of the third longitudinal support (41) in terms of the longitudinal direction.

13. System (1) according to any of the preceding claims, wherein the through-holes (32; 52) each extend in a transverse direction (C) extending transverse to the vertical direction (H) and to the longitudinal direction (L) .

## Revendications

1. Système modulaire de lancement de missiles (1) pour le lancement de missiles à partir d'une plate-forme mobile (100), comprenant un premier cadre porteur rectangulaire (2) qui présente :
une première poutre longitudinale (21) s'étendant dans une direction longitudinale (L), sur laquelle est formée au moins une structure d'accouplement de plate-forme (3A ; 3B) pour la fixation amovible du premier cadre porteur (2) à la plate-forme mobile (100) ;
une deuxième poutre longitudinale (22) s'étendant le long de la direction longitudinale (L), qui est disposée à distance de la première poutre longitudinale (21) dans une direction verticale (H) s'étendant transversalement à la direction longitudinale (L) et qui présente une première structure de liaison (30) sur une face inférieure orientée à l'opposé de la première poutre longitudinale (21), la première structure de liaison (30) définissant une première partie de liaison enfichable (31) s'étendant dans la direction longitudinale (L), sur laquelle un deuxième cadre porteur (4) peut être enfiché dans la direction verticale (H) au moyen d'une deuxième partie de liaison enfichable (51) de forme complémentaire à la première partie de liaison enfichable (31), et qui présente au moins deux premiers trous traversants (32) espacés dans la direction longitudinale (L), à travers chacun desquels peut passer un dispositif de liaison (6) pour fixer le premier et le deuxième cadre porteur (2 ; 4) l'un à l'autre lorsque le deuxième cadre porteur (4) est enfiché sur le premier cadre porteur (2) ; et au moins une structure de fixation de tube de lancement (25) pour monter un tube de lancement de missile (8) sur le premier cadre porteur (2).

2. Système (1) selon la revendication 1, dans lequel la première partie de liaison enfichable (31) est formée par un évidement formé sur la face inférieure de la deuxième poutre longitudinale (22) ou par un agencement de pattes faisant saillie de la face inférieure de la deuxième poutre longitudinale (22) dans la direction verticale (H).

3. Système (1) selon la revendication 1 ou 2, dans lequel la première partie de liaison enfichable (31) s'étend sur au moins 80 pour cent d'une longueur (122) de la deuxième poutre longitudinale (22) par rapport à la direction longitudinale.

4. Système (1) selon l'une des revendications précédentes, dans lequel le premier cadre porteur (2) présente au moins une première poutre transversale (26 ; 27) s'étendant transversalement aux poutres longitudinales.

5. Système (1) selon la revendication 4, dans lequel au moins une structure de fixation de tube de lancement (25) du premier cadre porteur (2) est formée sur la première poutre transversale (26 ; 27).

6. Système (1) selon la revendication 4 ou 5, dans lequel ladite au moins une première poutre transversale (26 ; 27) est formée d'une seule pièce avec l'une des poutres du groupe constitué par la première poutre longitudinale (21), la deuxième poutre longitudinale (22), une première poutre de liaison (23) reliant la première et la deuxième poutre longitudinale (21 ; 22) et une deuxième poutre de liaison (24) reliant la première et la deuxième poutre longitudinale (21 ; 22).

7. Système (1) selon l'une des revendications 4 à 6, dans lequel ladite au moins une première poutre transversale (26 ; 27) est disposée au niveau de la première poutre longitudinale (21) par rapport à la direction verticale (H) .

8. Système (1) selon l'une des revendications précédentes, dans lequel le premier cadre porteur (2) présente en outre au moins une entretoise de rigidification (28) s'étendant entre deux poutres choisies dans le groupe constitué par la première poutre longitudinale (21), la deuxième poutre longitudinale (22), une première poutre de liaison (23) reliant la première et la deuxième poutre longitudinale (21 ; 22) et une deuxième poutre de liaison (24) reliant la première et la deuxième poutre longitudinale (21 ; 22).

9. Système (1) selon l'une des revendications précédentes, présentant en outre :
au moins un tube de lancement (8) qui peut être relié ou est relié à ladite au moins une structure de fixation de tube de lancement (25) du premier cadre porteur (2).

10. Système (1) selon l'une des revendications précédentes, présentant en outre au moins deux dispositifs de liaison (6) et un deuxième cadre porteur (4) de forme rectangulaire, qui présente :
une troisième poutre longitudinale (41) s'étendant dans une direction longitudinale (L) qui présente sur une face supérieure une deuxième structure de liaison (50), la deuxième structure de liaison (50) définissant une deuxième partie de liaison enfichable (51) s'étendant dans la direction longitudinale (L) et de forme complémentaire à la première partie de liaison enfichable (31), qui peut être enfichée sur la première partie de liaison enfichable (31) du premier cadre porteur (2) dans la direction verticale (H), et qui présente au moins deux deuxièmes trous traversants (52) disposés dans la direction longitudinale (L) en correspondance avec les premiers trous traversants (32), les dispositifs de liaison (6) pouvant être chacun passés à travers les premiers et les deuxièmes trous traversants (32 ; 52) pour fixer le premier et le deuxième cadre porteur (2 ; 4) l'un à l'autre lorsque le deuxième cadre porteur (4) est enfiché sur le premier cadre porteur (2), et au moins une structure de fixation de tube de lancement (45) pour monter un tube de lancement de missile (8) sur le deuxième cadre porteur (4).

11. Système (1) selon la revendication 10, dans lequel la deuxième partie de liaison enfichable (50) est formée par un agencement de pattes faisant saillie de la face supérieure de la troisième poutre longitudinale (41) dans la direction verticale (H) ou par un évidement formé sur la face supérieure de la troisième poutre longitudinale (41) .

12. Système (1) selon la revendication 10 ou 11, dans lequel la deuxième partie de liaison enfichable (50) s'étend sur au moins 80 pour cent d'une longueur (141) de la troisième poutre longitudinale (41) par rapport à la direction longitudinale.

13. Système (1) selon l'une des revendications précédentes, dans lequel les trous traversants (32 ; 52) s'étendent chacun dans une direction transversale (C) s'étendant transversalement à la direction verticale (H) et à la direction longitudinale (L).
